# EUROPEAN PATENT SPECIFICATION

(11) **EP 2 886 838 B1**
(45) Date of publication and mention of the grant of the patent: **20.02.2019**
(21) Application number: 14197098.8
(22) Date of filing: 10.12.2014
(51) Int. Cl.: F02D 41/02, F01N 3/031, F01N 13/00, F02D 41/22

(54) **Exhaust gas purification system of an emergency vehicle**
Abgasreinigungssystem eines Notfallfahrzeugs
Système de purification de gaz d'échappement d'un véhicule de secours

(30) Priority: 18.12.2013 JP 2013261316
(43) Date of publication of application: 24.06.2015
(73) Proprietor: KABUSHIKI KAISHA TOYOTA JIDOSHOKKI, Kariya-shi, Aichi 448-8671 (JP)
(72) Inventor: Sakaino, Makoto, Kariya-shi, Aichi 448-8671 (JP); Amaike, Masaaki, Kariya-shi, Aichi 448-8671 (JP); Oikawa, Naohiko, Toyota-shi, Aichi 471-8571 (JP)
(74) Representative: TBK

(56) References cited:
- EP-A1- 0 525 566
- JP-A- S59 150 920
- JP-A- 2006 037 925
- JP-A- 2013 194 548
- US-A- 4 923 484
- US-A- 5 251 564
- "2007 Heavy-Duty Highway Rule - Revisions for Emergency Vehicle", , 8 June 2012 (2012-06-08), pages 34130-34148, XP055210050, Retrieved from the Internet: URL:http://www.gpo.gov/fdsys/pkg/FR-2012-0 6-08/pdf/2012-13088.pdf [retrieved on 2015-08-28]
- /: "2007 Heavy-Duty Highway Rule - Notice of Proposed Rulemaking on revisions for Emergency Vehicles and SCR Maintenance", , 8 June 2012 (2012-06-08), pages 34149-34178, XP055210068, Retrieved from the Internet: URL:http://www.gpo.gov/fdsys/pkg/FR-2012-0 6-08/pdf/2012-13087.pdf [retrieved on 2015-08-28]

## Description

### BACKGROUND OF THE INVENTION

The present invention relates to an exhaust gas purification system of an emergency vehicle that includes a filter for collecting particulate matters arranged in an exhaust gas passage of an engine.

Japanese Patent Laid-Open Publication JP 2006-037925 A, for example, describes an exhaust gas purification device according to the preamble of claim 1 that includes a filter for collecting particulates contained in exhaust gas from a vehicle engine. When the amount of particulates collected by the filter exceeds a first threshold, a warning lamp lights up to warn the driver to activate a switch for performing manual regeneration. That is, the warning lamp lights up to warn the driver to activate the switch for regenerating filter function by controlling the engine so as to burn off the particulates collected by the filter. If manual regeneration is not performed and the amount of particulates collected exceeds a second threshold, which is higher than the first threshold, the device reduces the maximum fuel injection amount and prompts the driver to perform manual regeneration. That is, the device limits the engine output and prompts the driver to perform manual regeneration. However, when the vehicle speed is equal to or higher than a predetermined speed, such as when the vehicle is travelling on an expressway, the device does not allow reduction of the maximum fuel injection amount. In this way, the vehicle can reach speeds as expected by the driver, and accidents etc. caused by the vehicle failing to reach higher speeds can be limited.

### SUMMARY OF THE INVENTION

In the invention described in the above disclosure, a warning for manual regeneration is first issued according to the amount of particulate matters collected by the filter. If manual regeneration is not performed for a continuous period, the maximum fuel injection amount is reduced and the driver is prompted to perform a regeneration process. Even in the state that requires reduction of the maximum fuel injection amount, if the vehicle speed is equal to or higher than a predetermined speed, the device does not allow reduction of the maximum fuel injection amount. However, the condition that the vehicle speed is equal to or higher than a predetermined speed alone is not always sufficient as the condition for prohibiting reduction of the maximum fuel injection amount.

For example, an emergency vehicle such as an ambulance may encounter a steep uphill while being dispatched to an emergency for lifesaving, etc. If the vehicle reaches a state which requires reduction of the maximum fuel injection amount (state in which the engine output is to be limited) at such time, the emergency vehicle may fail to reach speeds beyond a predetermined speed. Furthermore, the emergency vehicle may fail to climb up the uphill due to the influence of reduction of the maximum fuel injection amount. These circumstances possibly prevent the emergency vehicle from rushing to the scene of an emergency where every minute counts.

Further exhaust gas purification systems for an emergency vehicle are disclosed in "2007 Heavy-Duty Highway Rule - Revisions for Emergency Vehicle", 8 June 2012 (2012-06-08), pages 34130-34148, XP055210050, JP S59 150920 A, JP 2013 194548 and US 4 923 484 A.

An object of the present invention is to provide an exhaust gas purification system of an emergency vehicle which allows the emergency vehicle, when the emergency vehicle is being dispatched to an emergency, to reach the scene of the emergency as fast as possible even if the amount of particulate matters collected by a filter is a collection amount which requires limitation of an engine output.

According to the present invention, the above object is solved with exhaust purification systems of an emergency vehicle having the features of claims 1 and 2, respectively.

To achieve the foregoing objective, an exhaust gas purification system of an emergency vehicle according to the present invention includes: a notification part which notifies that the emergency vehicle is being dispatched to an emergency; a detection part which detects an operation state of an engine; a control unit which controls the engine on the basis of the operation state of the engine; and a main filter which collects particulate matters contained in exhaust gas from the engine. The control unit integrates an amount of particulate matters collected by the main filter on the basis of the operation state of the engine. The control unit performs a regeneration process of burning off the particulate matters collected by the main filter when the collection amount of particulate matters integrated exceeds a predetermined amount and, at the same time, when conditions for regeneration are satisfied. The control unit shifts the state of the engine to an engine output limitation state in which an engine output is limited when the regeneration process is not performed for a continuous period and the amount of particulate matters collected by the main filter exceeds a first predetermined amount which is larger than the predetermined amount. The control unit forcibly cancels the engine output limitation state when the emergency vehicle is being dispatched to an emergency and when the state of the engine is the engine output limitation state.

In the present invention, the exhaust gas purification device forcibly cancels the engine output limitation state when the emergency vehicle is being dispatched to an emergency, even if the amount of particulate matters collected by the filter is a collection amount which requires limitation of the engine output.

Thus, even if the amount of particulate matters collected by the main filter is a collection amount which requires limitation of the engine output when the emergency vehicle is being dispatched to an emergency, the vehicle can rush to the scene of the emergency at its maximum speed. Furthermore, even if the vehicle encounters a steep uphill while being dispatched to an emergency, the vehicle can rush to the scene of the emergency at the maximum speed. Therefore, the emergency vehicle can reach the scene of the emergency as fast as possible.

The exhaust gas purification system of an emergency vehicle according to the present invention further includes a sub-filter arranged in parallel to the main filter; and a passage switching unit. The passage switching unit can be switched between a main filter side for leading the exhaust gas from the engine to the main filter and a sub-filter side for leading the exhaust gas from the engine to the sub-filter on the basis of a control signal from the control unit. The control unit integrates a collection amount of the main filter when the passage switching unit is set to the main filter side. The control unit integrates a collection amount of the sub-filter when the passage switching unit is set to the sub-filter side. The control unit sets the passage switching unit to the sub-filter side when the emergency vehicle is being dispatched to an emergency, and when the passage switching unit is set to the main filter side and, at the same time, the collection amount of the main filter is above the first predetermined amount which requires the state of the engine to be shifted to the engine output limitation state. The control unit forcibly cancels the engine output limitation state when the collection amount of the sub-filter is above a second predetermined amount which requires the state of the engine to be shifted to the engine output limitation state.

In the present invention, the exhaust gas purification system includes the sub-filter and the passage switching unit. When the emergency vehicle is being dispatched to an emergency, if the amount of particulate matters collected by the main filter is a collection amount which requires limitation of the engine output, the control unit sets the passage switching unit to the sub-filter side. When the emergency vehicle is being dispatched to an emergency, the control unit forcibly cancels the engine output limitation state even if the amount of particulate matters collected by the sub-filter is a collection amount which requires limitation of the engine output.

Thus, when the emergency vehicle is being dispatched to an emergency, even if the amount of particulate matters collected by the main filter is a collection amount which requires limitation of the engine output, and even if the amount of particulate matters collected by the sub-filter is a collection amount which requires limitation of the engine output, the emergency vehicle can rush to the scene of the emergency at the maximum speed. Therefore, the emergency vehicle can reach the scene of the emergency as fast as possible.

Alternatively, in the exhaust gas purification system including the sub-filter and the passage switching unit, when the emergency vehicle is being dispatched to an emergency, the control unit forcibly sets the passage switching unit to the sub-filter side. If the amount of particulate matters collected by the sub-filter is a collection amount which requires limitation of the engine output, the control unit forcibly cancels the engine output limitation state.

Thus, when the emergency vehicle is being dispatched to an emergency, the control unit sets the passage switching unit to the sub-filter side regardless of whether or not the amount of particulate matters collected by the main filter is a collection amount which requires limitation of the engine output. Even if the amount of particulate matters collected by the sub-filter is a collection amount which requires limitation of the engine output, the emergency vehicle can rush to the scene of the emergency at the maximum speed. Therefore, the emergency vehicle can reach the scene of the emergency as fast as possible.

The exhaust gas purification system of an emergency vehicle may further include: a manual regeneration command part which is operated by an occupant of the emergency vehicle in order to perform a manual regeneration process of the sub-filter; and a manual regeneration urging part which urges the occupant to operate the manual regeneration command part. The control unit may activate the manual regeneration urging part after the emergency dispatch state is cancelled when the sub-filter is used during emergency dispatch of the emergency vehicle.

Preferably, in the case of an emergency vehicle including the sub-filter, if the sub-filter is used during emergency dispatch, the control unit urges that a regeneration process be performed after the emergency dispatch state is cancelled. Thus, it is useful to be able to urge the occupant to burn off the particulate matters collected in the sub-filter in preparation for the next emergency dispatch.

The exhaust gas purification system of an emergency vehicle may further include an emergency dispatch operation part which is turned on or off by an occupant of the emergency vehicle. The notification part may be activated through the emergency dispatch operation part. The control unit may determine that the emergency vehicle is being dispatched to an emergency when the emergency dispatch operation part is turned on. The control unit may determine that the emergency vehicle is being dispatched to an emergency as long as a predetermined condition is satisfied when the emergency dispatch operation part is turned off for a continuous period after being turned from on to off.

There are cases, for example, where an emergency vehicle reaching the scene of an emergency is stuck in a crowd of neighbors unrelated to the emergency who are attracted by the light of the warning lamp or the warning sound. If it is late at night, the light of the warning lamp or the warning sound may disturb the neighbors. To avoid such situations, occupants of the emergency vehicle often operate an emergency dispatch operation part so as to stop the warning lamp or the warning sound shortly before reaching the scene of the emergency.

Accordingly, even in the case as described above where the warning lamp and the warning sound are stopped shortly before the emergency vehicle reaches the scene of the emergency, the control unit can forcibly cancel the engine output limitation state on the assumption that the emergency vehicle is being dispatched to an emergency until the emergency vehicle reaches the scene of the emergency.

In the exhaust gas purification system of an emergency vehicle, the predetermined condition may at least be one of the following: that elapsed time since the emergency dispatch operation part is turned from on to off is less than predetermined time, and that a travel distance since the emergency dispatch operation part is turned from on to off is less than a predetermined distance.

Accordingly, even if the emergency dispatch operation part is off, the control unit assumes that the emergency vehicle is being dispatched to an emergency as long as at least one of the conditions, that the elapsed time since the emergency dispatch operation part is turned from on to off is within a predetermined time and that the travel distance since the emergency dispatch operation part is turned from on to off is within a predetermined
distance, is satisfied. Thus, even in the case where the emergency vehicle stops the warning lamp and the warning sound shortly before reaching the scene of the emergency, it is assumed that the emergency vehicle is being dispatched to an emergency until the emergency vehicle reaches the scene of the emergency. Therefore, the control unit can forcibly cancel the engine output limitation state.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
FIG. 1 is an explanatory view of the configuration of an exhaust gas purification system of an emergency vehicle according to the present invention;
FIG. 2 is a flowchart illustrating the procedure of a first embodiment;
FIG. 3 is a flowchart illustrating the procedure of the first embodiment;
FIG. 4 is a flowchart illustrating the procedure of the first embodiment;
FIG. 5 is a flowchart illustrating the procedure of the first embodiment;
FIG. 6 is a flowchart illustrating the procedure of the first embodiment;
FIGs. 7A and 7B are flowcharts illustrating the procedure of a second embodiment;
FIG. 8 is a flowchart illustrating the procedure of the second embodiment;
FIGs. 9A and 9B are flowcharts illustrating the procedure of the second embodiment;
FIG. 10 is a flowchart illustrating the procedure of the second embodiment;
FIG. 11 is a flowchart illustrating the procedure of the second embodiment; and
FIGs. 12A and 12B are flowcharts illustrating the procedure of a third embodiment.

### DETAILED DESCRIPTION OF THE PREFERRED EMBODIMENTS

In the following, embodiments for implementing the present invention will be described using the drawings.

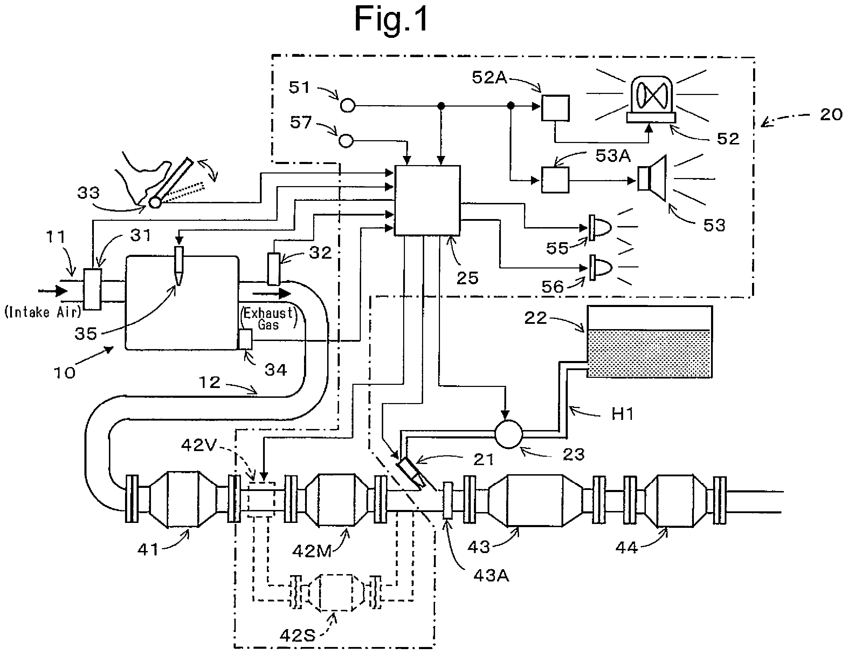

### • The configuration of an exhaust gas purification system 20 (FIG. 1)

The exhaust gas purification system of the present invention is mounted on an emergency vehicle such as an ambulance, a fire-fighting vehicle, and a patrol car, capable of notifying people around the vehicle that the vehicle is being dispatched to an emergency by means of a warning lamp, a siren, etc.

First, the configuration of an exhaust gas purification system 20 (of an emergency vehicle) of the present invention will be described using FIG. 1.

The exhaust gas purification system 20 of the present invention includes, in an exhaust gas passage 12 of an internal combustion engine 10 (in this case, a diesel engine) serving as an engine, a main filter 42M, a sub-filter 42S, a passage switching valve 42V (corresponding to a passage switching unit) provided halfway along the exhaust gas passage 12, a control device 25 (corresponding to a control unit), an emergency dispatch switch 51 (corresponding to an emergency dispatch operation part), a manual regeneration switch 57 (corresponding to a manual regeneration command part), a warning lamp 52 and a drive device 52A (corresponding to a notification part), a warning speaker 53 and a drive device 53A (corresponding to a notification part), a manual regeneration urging lamp 55 (corresponding to a manual regeneration urging part), a filter replacement demanding lamp 56 (a main filter replacement demanding lamp or a sub-filter replacement demanding lamp).

In FIG. 1, the passage switching valve 42V and the sub-filter 42S are indicated by the dotted line, as they are not required in the first embodiment to be described below but required in second and third embodiments.

In the exhaust gas passage 12, an oxidation catalyst 41, the main filter 42M and the sub-filter 42S, an SCR catalyst 43, and an oxidation catalyst 44 are sequentially connected from the upstream side. The oxidation catalyst 41 is a catalyst which detoxifies carbon hydrate (HC) and carbon monoxide (CO). The main filter 42M and the sub-filter 42S are a so-called DPF (Diesel Particulate Filter) which collects particulate matters present in exhaust gas.

The passage switching valve 42V can switch the exhaust gas passing through the oxidation catalyst 41 between a main filter side leading to the main filter 42M and a sub-filter side leading to the sub-filter 42S on the basis of a control signal from the control device 25.

The SCR catalyst 43 is a catalyst which detoxifies nitrogen oxide (NOx) with a reducer (e.g., urea water) injected from an addition valve 21 and diffused by a dispersion device 43A, while the oxidation catalyst 44 is a catalyst which detoxifies the reducer left unused in the reaction of the SCR catalyst.

A liquid reducer is stored in a reducer tank 22. One end of a discharge pipe H1 is connected at a lower part of the reducer tank 22, while the other end of the discharge pipe H1 is connected with the addition valve 21.

The discharge pipe H1 is provided with a pump 23, and the pump 23 pumps the reducer inside the reducer tank 22 toward the addition valve 21 on the basis of a control signal from the control device 25.

The addition valve 21 injects the liquid reducer used for purifying predetermined components (in this case, NOx) present in the exhaust gas from the upstream side of the SCR catalyst 43 toward the dispersion device 43A on the basis of a control signal from the control device 25. The other end of the discharge pipe H1 is connected with the addition valve 21.

The dispersion device 43A is constituted of a highly heat-conductive metal etc., and effectively mixes and diffuses the reducer injected from the addition valve 21 with the exhaust gas. A heating part is mounted on the outer periphery of a pipe of a dispersion device mounting part in order to promote the mixture and diffusion. When urea water is used as the reducer, the dispersion device mixes and diffuses the ammonia, which is produced by hydrolysis of the urea water, with the exhaust gas and promotes the hydrolysis by heating.

The emergency dispatch switch 51 is turned on or off through operation of an occupant, and the state of the emergency dispatch switch 51 is input into the control device 25. When the emergency dispatch switch 51 is turned on, the warning lamp 52 is lit up and the warning light is output through the drive device 52A, and at the same time, warning sound is output from the warning speaker 53 through the drive device 53A, notifying people around the vehicle that the vehicle is being dispatched to an emergency.

The manual regeneration switch 57 (corresponding to the manual regeneration command part) is turned on or off through operation of an occupant, and the state of the manual regeneration switch 57 is input into the control device 25. When the manual regeneration switch 57 is turned on while the manual regeneration urging lamp 55 is lit up, a manual regeneration process to be described later is performed.

The manual regeneration urging lamp 55 is lit up on the basis of a control signal from the control device 25 when the manual regeneration process of the main filter 42M is required or when the manual regeneration process of the sub-filter 42S is required.

The filter replacement demanding lamp 56 is lit up on the basis of a control signal from the control device 25 when the main filter 42M needs replacement or when the sub-filter 42S needs replacement.

Other than the inputs described above, the detection signal of a suction air flow late detection part 31, the detection signal of a NOx detection part 32, the detection signal of an accelerator opening degree detection part 33, the detection signal of a rotation detection part 34, and the detection signal of a shift position detection part (not shown) are input into the control device 25. The control device 25 can detect the operation state of the internal combustion engine 10 on the basis of the signals from these detection parts. Other than the outputs described above, the control device 25 also outputs a drive signal to an injector 35 which injects fuel into the internal combustion engine 10.

The suction air flow rate detection part 31 is provided in a suction passage 11 of the internal combustion engine 10 and outputs a detection signal according to the flow rate of the air inhaled by the internal combustion engine 10. The NOx detection part 32 is provided in the exhaust gas passage 12 of the internal combustion engine 10 and outputs a detection signal according to the NOx present in the exhaust gas of the internal combustion engine 10. The accelerator opening degree detection part 33 outputs a detection signal according to the opening degree of the accelerator operated by the driver (i.e., a load required by the driver). The rotation detection part 34 outputs a detection signal, for example, according to the rotation of a crankshaft of the internal combustion engine 10. The shift position detection part outputs a detection signal according to the position of a shift lever (park, neutral, D-range, S-range, etc.).

In the following, the first embodiment to the third embodiment of the procedure of the control device 25 in the exhaust gas purification system (of an emergency vehicle) of the present invention will be described.

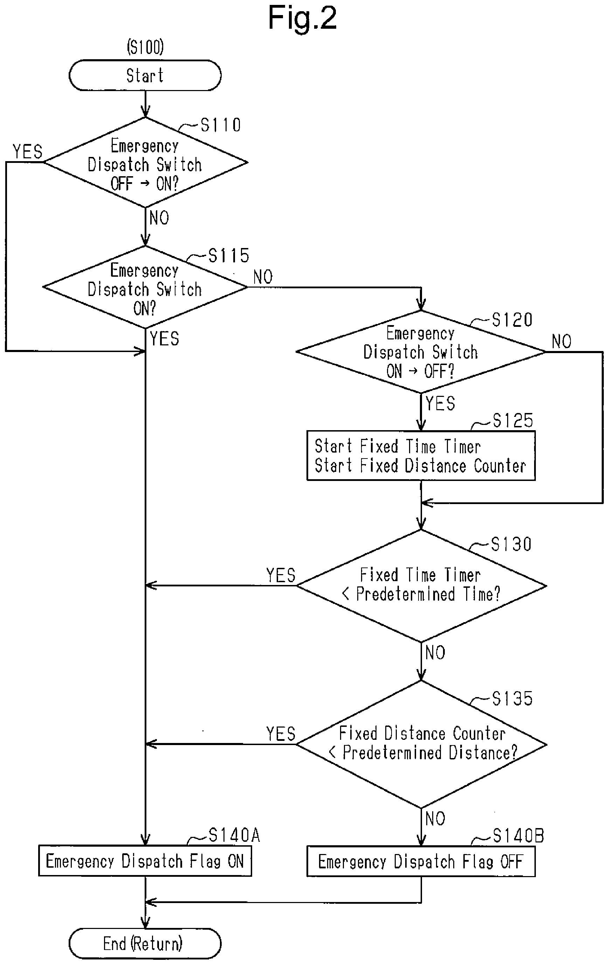

### • The procedure of the first embodiment (FIG. 2 to FIG. 6)

In the first embodiment, the exhaust gas purification system 20 shown in FIG. 1 includes the main filter 42M but does not includes the sub-filter 42S and the passage switching valve 42V.

In the first embodiment, even if the amount of particulate matters collected by the main filter 42M is a collection amount which requires limitation of the engine output, the system forcibly cancels the engine output limitation state when the emergency vehicle is being dispatched to an emergency.

The following is a description of details of the flowcharts of FIG. 2 to FIG. 6.

### • Description of a process S100 (FIG. 2) of the first embodiment

First, the process S100 shown in FIG. 2 will be described. The control device 25 starts the process S100, for example, at predetermined time intervals (intervals of several milliseconds to several tens of milliseconds, etc.). The process S100 is a process of turning an emergency dispatch flag on or off.

When the emergency dispatch switch is on, the control device 25 determines that the emergency vehicle is being dispatched to an emergency. When the emergency dispatch switch is turned from on to off, the control device 25 determines that the emergency vehicle is being dispatched to an emergency as long as one of the conditions, that the elapsed time since then is within predetermined time and that the travel distance since then is within a predetermined distance, is satisfied.

Alternatively, the control device 25 may determine that the emergency vehicle is being dispatched to an emergency until predetermined time elapses and also the emergency vehicle travels a predetermined distance. In another alternative, the control device 25 may determine that the emergency vehicle is being dispatched to an emergency until at least one of the conditions, that predetermined time elapses and that the emergency vehicle travels a predetermined distance, is satisfied.

In step S110, the control device 25 determines whether or not the emergency dispatch switch 51 is turned from off to on. That is, the control device 25 determines whether or not the emergency dispatch switch 51 which is determined to be off last time is on this time. If the emergency dispatch switch 51 is turned from off to on (Yes), the control device 25 proceeds to step S140A, and if not (No), the control device 25 proceeds to step S115.

If the control device 25 proceeds to step S115, the control device 25 determines whether or not the emergency dispatch switch 51 is on. If the emergency dispatch switch 51 is on (Yes), the control device 25 proceeds to step S140A, and if the emergency dispatch switch 51 is not on (No), the control device 25 proceeds to step S120.

If the control device 25 proceeds to step S120, the control device 25 determines whether or not the emergency dispatch switch 51 is turned from on to off. If the emergency dispatch switch 51 is turned from on to off (Yes), the control device 25 proceeds to step S125, and if not (No), the control device 25 proceeds to step S130.

If the control device 25 proceeds to step S125, the control device 25 starts (initializes) a fixed time timer and a fixed distance counter, and proceeds to step S130. The fixed time timer is a timer which measures elapsed time since the emergency dispatch switch is turned from on to off, and the fixed distance counter is a counter which measures a travel distance since the emergency dispatch switch is turned from on to off, and the time and the distance are each counted by a separate process (not shown).

When the control device 25 proceeds to step S130, the control device 25 determines whether or not the time measured by the fixed time timer is less than predetermined time (e.g., less than several tens of minutes). If the time measured is less than the predetermined time (Yes), that is, if the predetermined time does not elapse since the emergency dispatch switch is turned from on to off, the control device 25 proceeds to step S140A, and if time equal to or more than the predetermined time elapses (No), the control device 25 proceeds to step S135.

If the control device 25 proceeds to step S135, the control device 25 determines whether or not the distance measured by the fixed distance counter is less than a predetermined distance (e.g., less than several hundreds of meters to several hundreds of kilometers). If the distance measured is less than the predetermined distance (Yes), that is, if the emergency vehicle travels does not travel the predetermined distance since the emergency dispatch switch is turned from on to off, the control device 25 proceeds to step S140A, and if the emergency vehicle travels a distance equal to or more than the predetermined distance (No), the control device 25 proceeds to step S140B.

If the control device 25 proceeds to step S140A, the control device 25 sets an emergency dispatch flag to on and ends the process S100. That is, the control device 25 determines that the emergency vehicle is being dispatched to an emergency and ends the process S100.

If the control device 25 proceeds to step S140B, the control device 25 sets the emergency dispatch flag to off and ends the process S100. That is, the control device 25 determines that the emergency vehicle is not being dispatched to an emergency and ends the process S100.

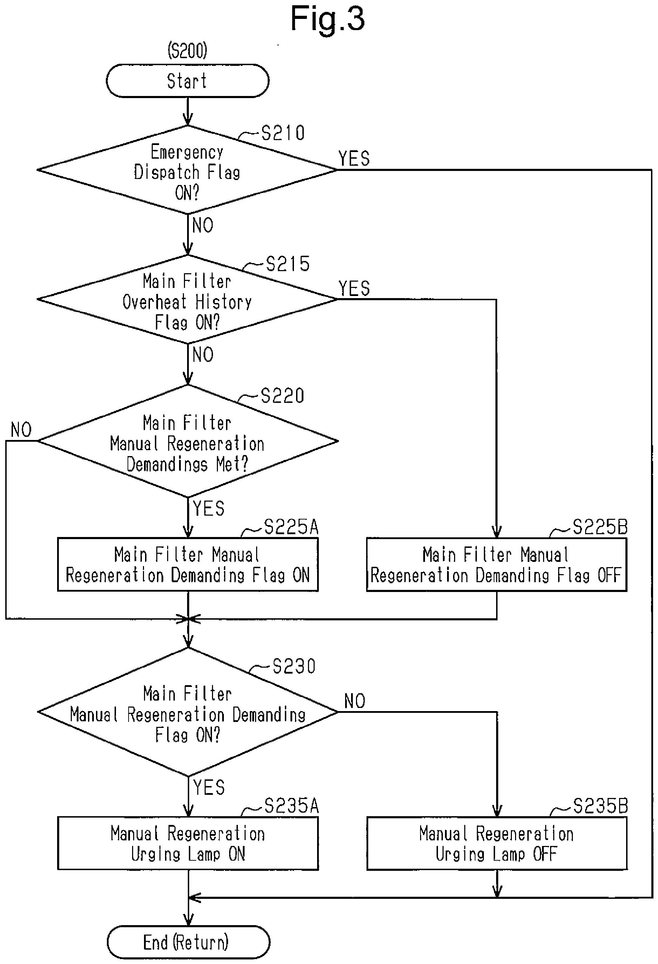

### • Description of a process S200 (FIG. 3) of the first embodiment

Next, the process S200 shown in FIG. 3 will be described. The control device 25 starts the process S200, for example, at predetermined time intervals (intervals of several milliseconds to several tens of milliseconds, etc.). The process S200 is a process related to a main filter manual regeneration demanding flag and a manual regeneration urging lamp.

Although not shown, the control device 25 integrates the amount of particulate matters collected by the main filter 42M on the basis of the operation state of the engine. If the amount of particulate matters integrated exceeds an automatic regeneration threshold (corresponding to a predetermined amount for automatic regeneration), the control device 25 performs a regeneration process (automatic regeneration process) of burning off the particulate matters collected by the main filter 42M when conditions for regeneration are satisfied. For example, when the collection amount of the main filter exceeds the automatic regeneration threshold, if the vehicle speed is equal to or higher than a predetermined speed and at the same time the number of revolutions of the engine is equal to or higher than a predetermined number of revolutions, the control device 25 performs the regeneration process (automatic regeneration process) of forcibly increasing the temperature of the exhaust gas inside the main filter 42M by delaying the injection timing, lowers the injection pressure, injects fuel from an injection valve provided on the upstream side of the oxidation catalyst, etc. so as to increase the exhaust gas temperature. Then, the control device 25 burns off the particulate matters collected inside the main filter 42M, and after burning off for the predetermined time (e.g., about several tens of minutes), cancels the regeneration process and initializes (resets) the collection amount of the main filter. If the regeneration conditions are not satisfied, that is, if the vehicle speed is equal to or higher than a predetermined speed and at the same time the number of revolutions of the engine is equal to or higher than a predetermined number of revolutions, the regeneration process is not performed, so that the collection amount of the main filter keeps on increasing.

When the collection amount exceeds a manual regeneration threshold (corresponding to a predetermined amount for manual regeneration) which is higher than the automatic regeneration threshold, the control device 25 determines that the state does not allow safe execution of the regeneration process, and lights up the manual regeneration urging lamp to prompt the occupant to manually perform the manual regeneration process. That is, the control device 25 lights up the manual regeneration urging lamp in order to prompt the occupant to operate the manual regeneration switch 57.

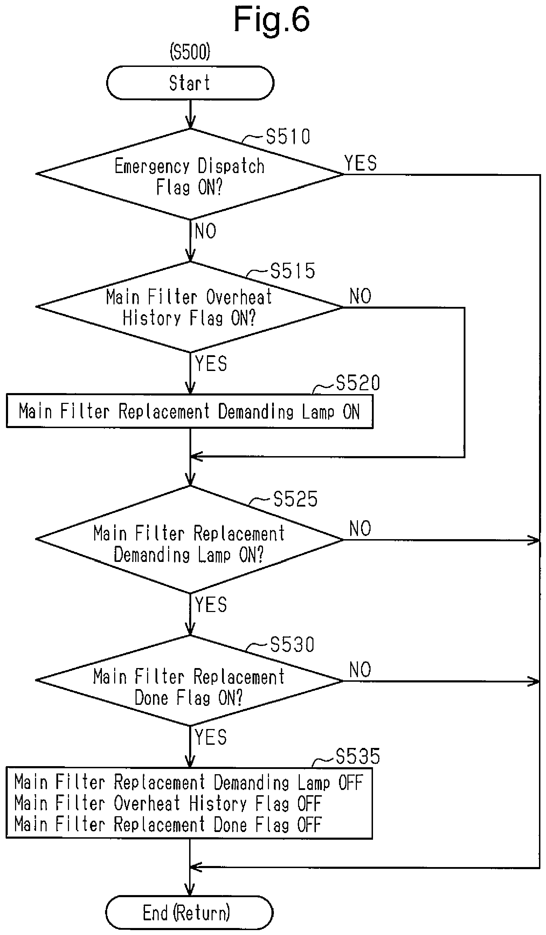

A main filter overheat history flag is a flag which is turned on when overheating of the main filter beyond a predetermined temperature is detected, but the process for this will not be described herein. When the main filter overheat history flag is on, which means the main filter needs replacement, the control device 25 demands not manual regeneration but replacement of the main filter. See FIG. 6 for the replacement demand.

In step S210, the control device 25 determines whether or not the emergency dispatch flag is on. If the flag is on (Yes), the control device 25 ends the process S200, and if the flag is not on (No), the control device 25 proceeds to step S215.

If the control device 25 proceeds to step S215, the control device 25 determines whether or not the main filter overheat history flag is on. If the flag is on (Yes), the control device 25 proceeds to step S225B, and if the flag is not on (No), the control device 25 proceeds to step S220.

If the control device 25 proceeds to step S220, the control device 25 determines whether or not conditions for demanding manual regeneration of the main filter are met. If the conditions are met (Yes), the control device 25 proceeds to step S225A, and if the conditions are not met (No), the control device 25 proceeds to step S230. The conditions for demanding manual regeneration of the main filter are met, for example, when the amount of particulate matters collected by the main filter is above the manual regeneration threshold.

If the control device 25 proceeds to step S225A, the control device 25 sets the main filter manual regeneration demanding flag to on and proceeds to step S230. If the control device 25 proceeds to step S225B, the control device 25 sets the main filter manual regeneration demanding flag to off and proceeds to step S230.

If the control device 25 proceeds to step S230, the control device 25 determines whether or not the main filter manual regeneration demanding flag is on. If the flag is on (Yes), the control device 25 proceeds to step S235A, and if the flag is not on (No), the control device 25 proceeds to step S235B.

If the control device 25 proceeds to step S235A, the control device 25 sets the manual regeneration urging lamp to on and ends the process S200. If the control device 25 proceeds to step S235B, the control device 25 sets the manual regeneration urging lamp to off and ends the process S200.

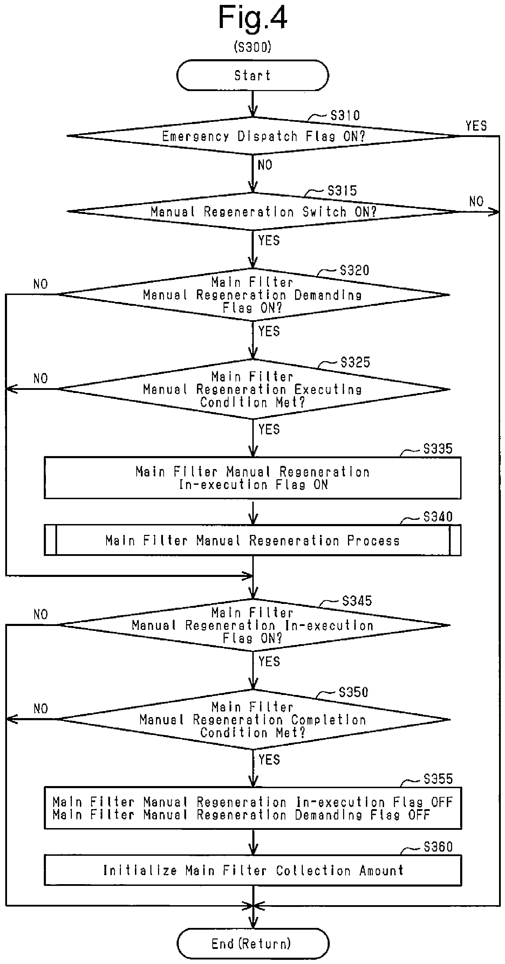

### • Description of a process S300 (FIG. 4) of the first embodiment

Next, the process S300 shown in FIG. 4 will be described. The control device 25 starts the process S300, for example, at predetermined time intervals (intervals of several milliseconds to several tens of milliseconds, etc.). The process S300 is a process related to manual regeneration of the main filter.

When the occupant perceives lighting of the manual regeneration urging lamp, the occupant can stop the vehicle at a safe place and turn on the manual regeneration switch to perform manual regeneration of the main filter.

If the manual regeneration switch is turned on, for example, when the vehicle is standing still, the shift lever (gear) is in neutral or park, and the accelerator depression amount is zero, the control device 25 increases the number of revolutions of the engine from an idling state to a predetermined number of revolutions and further forcibly increases the exhaust gas temperature. In this way, the particulate matters collected in the main filter are burned off. After predetermined time (e.g., about several tens of minutes) of burning off, the control device 25 cancels the manual regeneration process and initializes the collection amount of the main filter. That is, the control device 25 resets the collection amount of the main filter.

In step S310, the control device 25 determines whether or not the emergency dispatch flag is on. If the flag is on (Yes), the control device 25 ends the process S300, and if the flag is not on (No), the control device 25 proceeds to step S315.

If the control device 25 proceeds to step S315, the control device 25 determines whether or not the manual regeneration switch 57 is on. If the switch is on (Yes), the control device 25 proceeds to step S320, and if the switch is not on (No), the control device 25 ends the process S300.

If the control device 25 proceeds to step S320, the control device 25 determines whether or not the main filter manual regeneration demanding flag is on. If the flag is on (Yes), the control device 25 proceeds to step S325, and if the flag is not on (No), the control device 25 proceeds to step S345.

If the control device 25 proceeds to step S325, the control device 25 determines whether or not conditions for executing main filter manual regeneration are met. If the conditions are met (Yes), the control device 25 proceeds to step S335, and if the conditions are not met (No), the control device 25 proceeds to step S345. The conditions for executing main filter manual regeneration are, for example, that the vehicle is standing still, the shift lever (gear) is in neutral or park, and the accelerator depression amount is zero.

If the control device 25 proceeds to step S335, the control device 25 sets the main filter manual regeneration in-execution flag to on and proceeds to step S340.

In step S340, the control device 25 executes the manual regeneration process of the main filter and proceeds to step S345. Details of the manual regeneration process of the main filter will not be described herein. In the manual regeneration process of the main filter, the temperature of the exhaust gas inside the main filter is forcibly increased to burn off the particulate matters collected, for example, by forcibly increasing the number of revolutions to a predetermined number of revolutions, delaying the injection timing, reducing the injection pressure, or injecting fuel from the injection valve provided on the upstream side of the oxidation catalyst.

If the control device 25 proceeds to step S345, the control device 25 determines whether or not the main filter manual regeneration in-execution flag is on. If the flag is on (Yes), the control device 25 proceeds to step S350, and if the flag is not on (No), the control device 25 ends the process S300.

If the control device 25 proceeds to step S350, the control device 25 determines whether or not conditions for completion of main filter manual regeneration are met. If the conditions are met (Yes), the control device 25 proceeds to S355, and if the conditions are not met (No), the control device 25 ends the process S300. The conditions for completion of main filter manual regeneration are, for example, that the elapsed time since the main filter manual regeneration in-execution flag is turned on and the manual regeneration process is executed is equal to or more than predetermined time (e.g., about several tens of minutes). If the control device 25 proceeds to step S355, the control device 25 sets the main filter manual regeneration in-execution flag to off and sets the main filter manual regeneration demanding flag to off before proceeding to step S360.

If the control device 25 proceeds to step S360, the control device 25 initializes (resets) the amount of particulate matters collected by the main filter and ends the process S300.

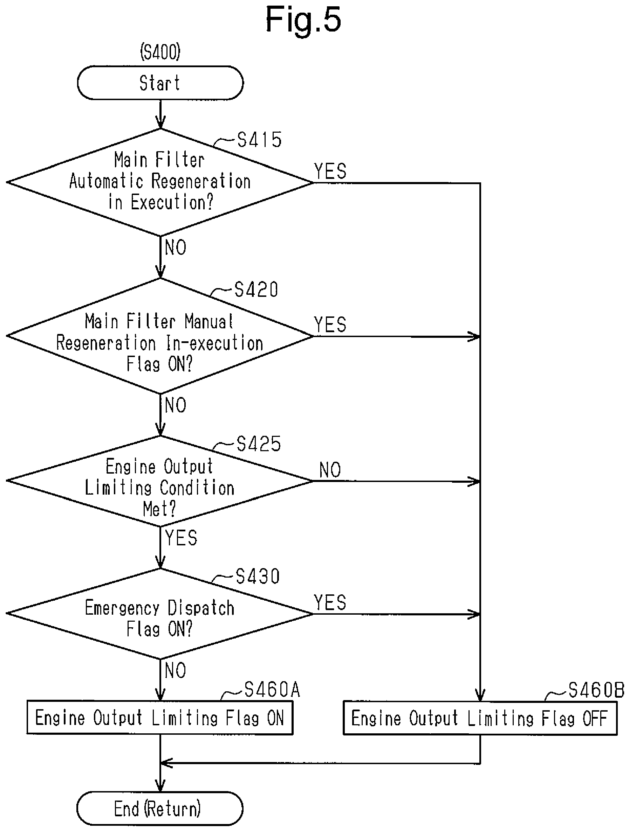

### • Description of a process S400 (FIG. 5) of the first embodiment

Next, the process S400 shown in FIG. 5 will be described. The control device 25 starts the process S400, for example, at predetermined time intervals (intervals of several milliseconds to several tens of milliseconds, etc.). The process S400 is a process of turning on or off an engine output limitation flag.

When the amount of particulate matters collected by the main filter exceeds an output limitation threshold (corresponding to a first predetermined amount) which is higher than the manual regeneration threshold, the control device 25 forcibly limits the engine output by reducing the fuel injection amount, etc. That is, the control device 25 shifts the state of the engine to an engine output limitation state. In this way, the control device 25 reminds the occupant of the emergency vehicle that the main filter is in a state which requires the regeneration process. However, when the emergency vehicle is being dispatched to an emergency, the control device 25 forcibly cancels the engine output limitation state so that the vehicle can reach the scene of the emergency as fast as possible.

In step S415, the control device 25 determines whether or not the automatic regeneration process of the main filter is in execution. That is, the control device 25 determines whether or not the automatic regeneration process is being executed. If the automatic regeneration process is in execution (Yes), the control device 25 proceeds to step S460B, and if the automatic regeneration process is not in execution (No), the control device 25 proceeds to step S420. Details of the automatic regeneration process will not be described herein.

If the control device 25 proceeds to step S420, the control device 25 determines whether or not the main filter manual regeneration in-execution flag is on. If the flag is on (Yes), the control device 25 proceeds to step S460B, and if the flag is not on (No), the control device 25 proceeds to step S425.

If the control device 25 proceeds to step S425, the control device 25 determines whether or not conditions for limiting the engine output are met. If the conditions are met (Yes), the control device 25 proceeds to step S430, and if the conditions are not met (No), the control device 25 proceeds to step S460B. The control device 25 determines that the conditions for limiting the engine output are met, for example, when the amount of particulate matters collected by the main filter exceeds the output limitation threshold (corresponding to the first predetermined amount) which is higher than the manual regeneration threshold. That is, the control device 25 determines that the conditions for limiting the engine output for the main filter are established. The manual regeneration threshold is a value higher than the automatic regeneration threshold.

If the control device 25 proceeds to step S430, the control device 25 determines whether or not the emergency dispatch flag is on. If the flag is on (Yes), the control device 25 proceeds to step S460B, and if the flag is not on (No), the control device 25 proceeds to step S460A.

If the control device 25 proceeds to step S460A, the control device 25 sets the engine output limitation flag to on and ends the process S400. That is, the control device 25 shifts the state of the engine to the engine output limitation state and ends the process S400. If the control device 25 proceeds to step S460B, the control device 25 sets the engine output limitation flag to off and ends the process S400. That is, the control device 25 cancels the engine output limitation state and ends the process S400.

Thus, in the process S400, even when the engine is in a state which should be shifted to the engine output limitation state, the control device 25 forcibly cancels the engine output limitation state if the control device 25 determines that the emergency vehicle is being dispatched to an emergency in step S430.

### • Description of a process S500 (FIG. 6) of the first embodiment

Next, the process S500 shown in FIG. 6 will be described. The control device 25 starts the process S500, for example, at predetermined time intervals (intervals of several milliseconds to several tens of milliseconds, etc.). The process S500 is a process related to the main filter replacement demanding flag and the main filter replacement demanding lamp (the filter replacement demanding lamp 56).

When the occupant of the emergency vehicle perceives that the main filter replacement demanding lamp is on, the occupant can perceive that the main filter needs replacement and that the replacement should be made promptly. After replacing the main filter, the occupant connects a tool etc. capable of communicating with the control device 25, and sets the main filter replacement done flag to on through this tool etc. in order to indicate that the replacement of the main filter is done.

In step S510, the control device 25 determines whether or not the emergency dispatch flag is on. If the flag is on (Yes), the control device 25 ends the process S500, and if the flag is not on (No), the control device 25 proceeds to step S515.

If the control device 25 proceeds to step S515, the control device 25 determines whether or not the main filter overheat history flag is on, and if the flag is on (Yes), the control device 25 proceeds to step S520, and if the flag is not on (No), the control device 25 proceeds to step S525.

If the control device 25 proceeds to step S520, the control device 25 sets the main filter replacement demanding lamp to on and proceeds to step S525.

If the control device 25 proceeds to step S525, the control device 25 determines whether or not the main filter replacement demanding lamp is on. If the lamp is on (Yes), the control device 25 proceeds to step S530, and if the lamp is not on (No), the control device 25 ends the process S500.

If the control device 25 proceeds to step S530, the control device 25 determines whether or not the main filter replacement done flag is on. If the flag is on, the control device 25 proceeds to step S535, and if the flag is not on (No), the control device 25 ends the process S500.

If the control device 25 proceeds to step S535, the control device 25 sets the main filter replacement demanding lamp to off, sets the main filter overheat history flag to off, and sets the main filter replacement done flag to off before ending the process S500.

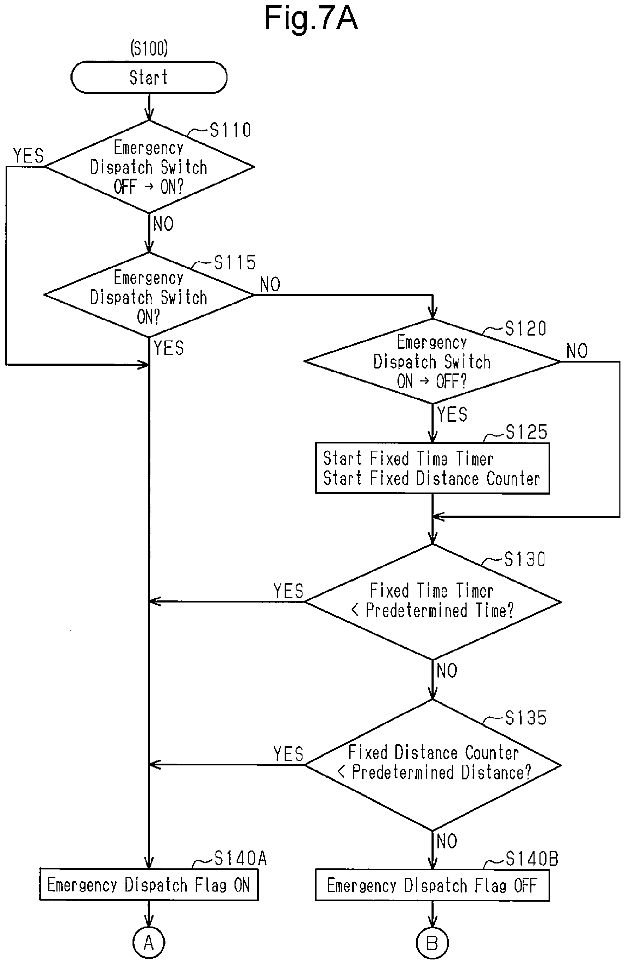

### • The procedure of a second embodiment (FIG. 7A to FIG. 11)

In the second embodiment, the procedure will be described where the exhaust gas purification system 20 of an emergency vehicle shown in FIG. 1 includes the main filter 42M, the sub-filter 42S, and the passage switching valve 42V.

In the second embodiment, in the case where the amount of particulate matters collected by the main filter 42M when the passage switching valve is set to the main filter side is a collection amount (corresponding to a first predetermined amount) which requires the state of the engine to be shifted to the engine output limitation state, if the emergency vehicle is being dispatched to an emergency, the control device 25 sets the passage switching valve to the sub-filter 42S side. Moreover, when the amount of particulate matters collected by the sub-filter 42S is a collection amount (corresponding to a second predetermined amount) which requires the state of the engine to be shifted to the engine output limitation state, the control device 25 forcibly cancels the engine output limitation state. When the sub-filter is used, the control device 25 turns on a sub-filter use history flag for urging that the manual regeneration process of the sub-filter be performed after the emergency dispatch state is cancelled.

Although not shown, when the passage switching valve 42V is set to the main filter side, the control device 25 integrates the amount of particulate matters collected by the main filter 42M (the main filter collection amount) on the basis of the operation state of the engine. When the passage switching valve 42V is set to the sub-filter side, the control device 25 integrates the amount of particulate matters collected by the sub-filter 42S (the sub-filter collection amount) on the basis of the operation state of the engine.

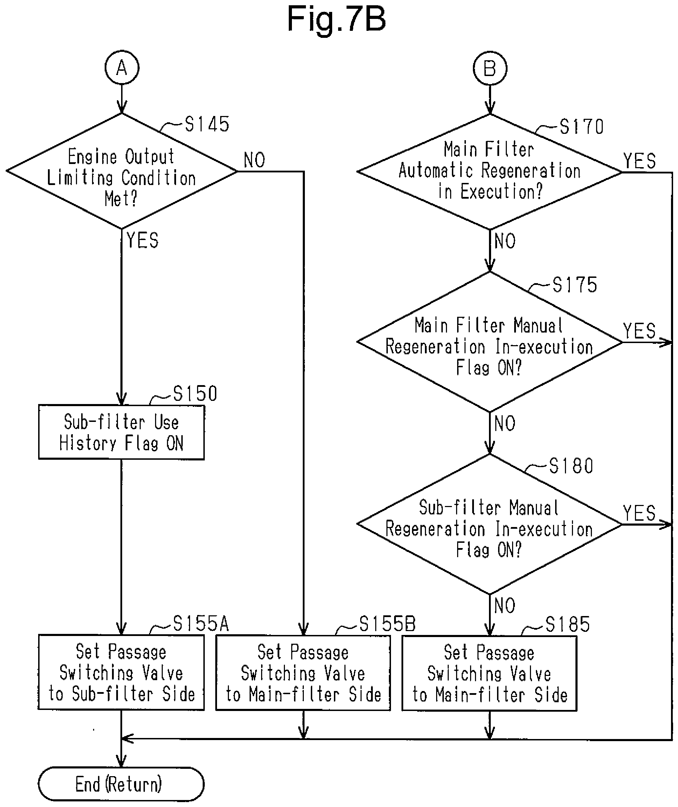

In the following, details of the flowcharts shown in FIG. 7A to FIG. 11 will be described mainly in terms of differences from the flowcharts of the first embodiment. • Description of the process S100 (FIGs. 7A and 7B) of the second embodiment.

First, the process S100 shown in FIGs. 7A and 7B will be described. The process of the flowchart shown in FIGs. 7A and 7B differs from that of the flowchart of the first embodiment shown in FIG. 2 in that the processes of step S145 to S155A, 155B, and step S170 to step S185 indicated by the thick solid line are added. The following description will be focused on this difference.

In the process S100 of the second embodiment, when the emergency vehicle is being dispatched to an emergency, the control device 25 sets the passage switching valve to the sub-filter side if the passage switching valve is switched to the main filter side and at the same time the main filter is in a state which requires the state of the engine to be shifted to the engine output limitation state (i.e., when the collection amount is above the output limitation threshold). When the emergency vehicle is not being dispatched to an emergency, the control device 25 sets the passage switching valve to the main filter side except during a special state such as when manual regeneration of the sub-filter is in execution.

If the control device 25 proceeds to step S140A, the control device 25 sets the emergency dispatch flag to on and proceeds to step S145.

If the control device 25 proceeds to step S145, the control device 25 determines whether or not the conditions for limiting the output for the main filter are met. If the conditions are met (Yes), the control device 25 proceeds to step S150, and if the conditions are not met (No), the control device 25 proceeds to step S155B. The control device 25 determines that the conditions for limiting the engine output are met, for example, when the amount of particulate matters collected by the main filter exceeds the output limitation threshold (corresponding to the first predetermined amount) which is higher than the manual regeneration threshold. The manual regeneration threshold is higher than the automatic regeneration threshold.

If the control device 25 proceeds to step S150, the control device 25 sets the sub-filter use history flag to on and proceeds to step S155A.

In step S155A, the control device 25 sets the passage switching valve 42A to the sub-filter side and ends the process S100. If the control device 25 proceeds to step S155B, the control device 25 sets the passage switching valve 42V to the main filter side and ends the process S100.

If the control device 25 proceeds to step S140B, the control device 25 sets the emergency dispatch flag to off and proceeds to step S170.

If the control device 25 proceeds to step S170, the control device 25 determines whether or not automatic regeneration of the main filter is in execution. If automatic regeneration of the main filter is in execution (Yes), the control device 25 ends the process S100, and if automatic regeneration of the main filter is not in execution (No), the control device 25 proceeds to step S175.

If the control device 25 proceeds to step S175, the control device 25 determines whether or not the main filter manual regeneration in-execution flag is on. If the flag is on (Yes), the control device 25 ends the process S100, and if the flag is not on (No), the control device 25 proceeds to step S180.

If the control device 25 proceeds to step S180, the control device 25 determines whether or not the sub-filter manual regeneration in-execution flag is on. If the flag is on (Yes), the control device 25 ends the process S100, and if the flag is not on (No), the control device 25 proceeds to step S185.

If the control device 25 proceeds to step S185, the control device 25 sets the passage switching valve 42V to the main filter side and ends the process S100.

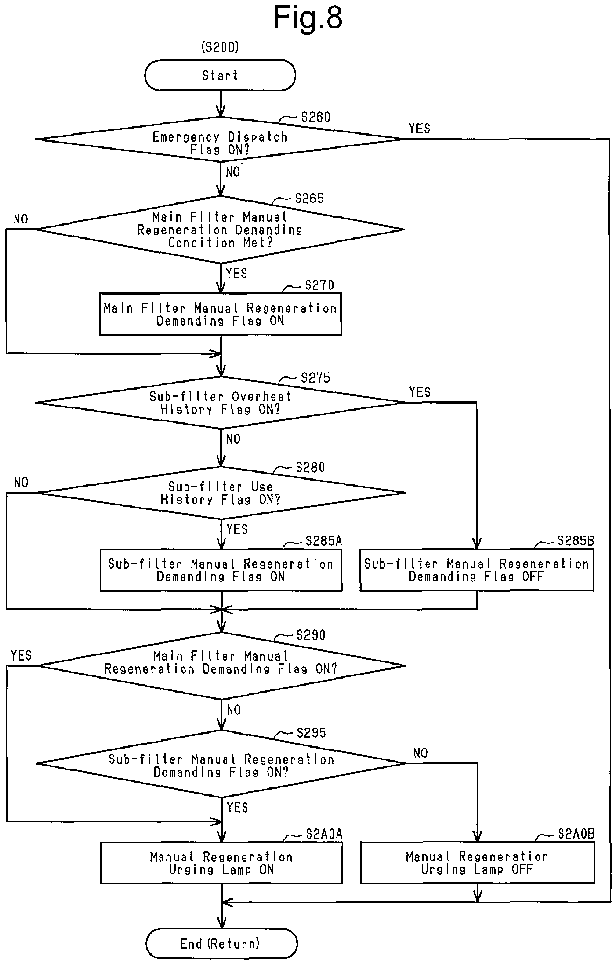

### • Description of the process S200 (FIG. 8) of the second embodiment

Next, the process S200 shown in FIG. 8 will be described. The process shown in the flowchart of FIG. 8 is entirely changed compared with the flowchart of the first embodiment shown in FIG. 3, and will therefore be described entirely.

The control device 25 starts the process S200, for example, at predetermined time intervals (intervals of several milliseconds to several tens of milliseconds, etc.). The process S200 is a process related to the main filter manual regeneration demanding flag, the sub-filter manual regeneration demanding flag, and the manual regeneration urging lamp.

When the amount of particulate matters collected by the main filter exceeds the main filter manual regeneration threshold (corresponding to a predetermined amount for manual regeneration) which is higher than the main filter automatic regeneration threshold (corresponding to a predetermined amount for automatic regeneration), the control device 25 determines that the state does not allow safe execution of the automatic regeneration process. In order to prompt the occupant to manually perform the manual regeneration process of the main filter, the control device 25 lights up the manual regeneration urging lamp.

If the sub-filter is used during emergency dispatch, the control device 25 lights up the manual regeneration urging lamp in order to prompt the occupant to manually perform the manual regeneration process of the sub-filter in preparation for the next emergency dispatch.

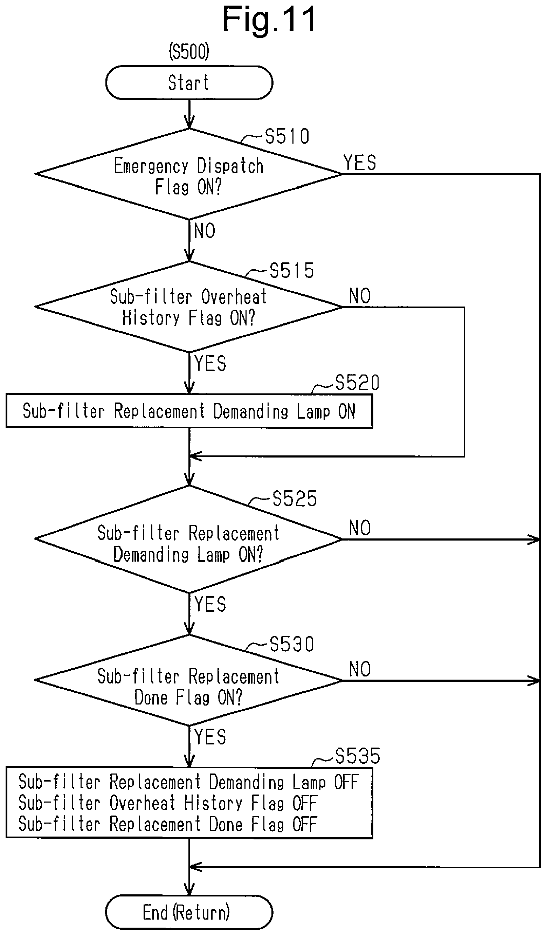

The sub-filter overheat history flag is a flag which is turned on when overheating of the sub-filter beyond a predetermined temperature is detected, but the process for this will not be described herein. When the sub-filter overheat history flag is on, which means that the sub-filter needs replacement, the control device 25 demands not manual regeneration but replacement of the sub-filter (see FIG. 11 for replacement demand).

In step S260, the control device 25 determines whether or not the emergency dispatch flag is on. If the flag is on (Yes), the control device 25 ends the process S200, and if the flag is not on (No), the control device 25 proceeds to step S265.

If the control device 25 proceeds to step S265, the control device 25 determines whether or not the conditions for demanding manual regeneration of the main filter are met. If the conditions are met (Yes), the control device 25 proceeds to step S270, and if the conditions are not met (No), the control device 25 proceeds to step S275. The conditions for demanding manual regeneration of the main filter are met, for example, when the amount of particulate matters collected by the main filter is above the manual regeneration threshold (corresponding to the predetermined amount for manual regeneration of the main filter).

If the control device 25 proceeds to step S270, the control device 25 sets the main filter manual regeneration demanding flag to on and proceeds to step S275.

If the control device 25 proceeds to step S275, the control device 25 determines whether or not the sub-filter overheat history flag is on. If the flag is on (Yes), the control device 25 proceeds to step S285B, and if the flag is not on (No), the control device 25 proceeds to step S280.

If the control device 25 proceeds to step S280, the control device 25 determines whether or not the sub-filter use history flag is on. If the flag is on (Yes), the control device 25 proceeds to step S285A, and if the flag is not on (No), the control device 25 proceeds to step S290.

If the control device 25 proceeds to step S285A, the control device 25 sets the sub-filter manual regeneration demanding flag to on and proceeds to step S290. If the control device 25 proceeds to step S285B, the control device 25 sets the sub-filter manual regeneration demanding flag to off and proceeds to step S290.

If the control device 25 proceeds to step S290, the control device 25 determines whether or not the main filter manual regeneration demanding flag is on. If the flag is on (Yes), the control device 25 proceeds to step S2A0A, and if the flag is not on (No), the control device 25 proceeds to step S295.

If the control device 25 proceeds to step S295, the control device 25 determines whether or not the sub-filter manual regeneration demanding flag is on. If the flag is on (Yes), the control device 25 proceeds to step S2A0A, and if the flag is not on (No), the control device 25 proceeds to step S2A0B.

If the control device 25 proceeds to step S2A0A, the control device 25 sets the manual regeneration urging lamp to on and ends the process S200. If the control device 25 proceeds to step S2A0B, the control device 25 sets the manual regeneration urging lamp to off and ends the process S200.

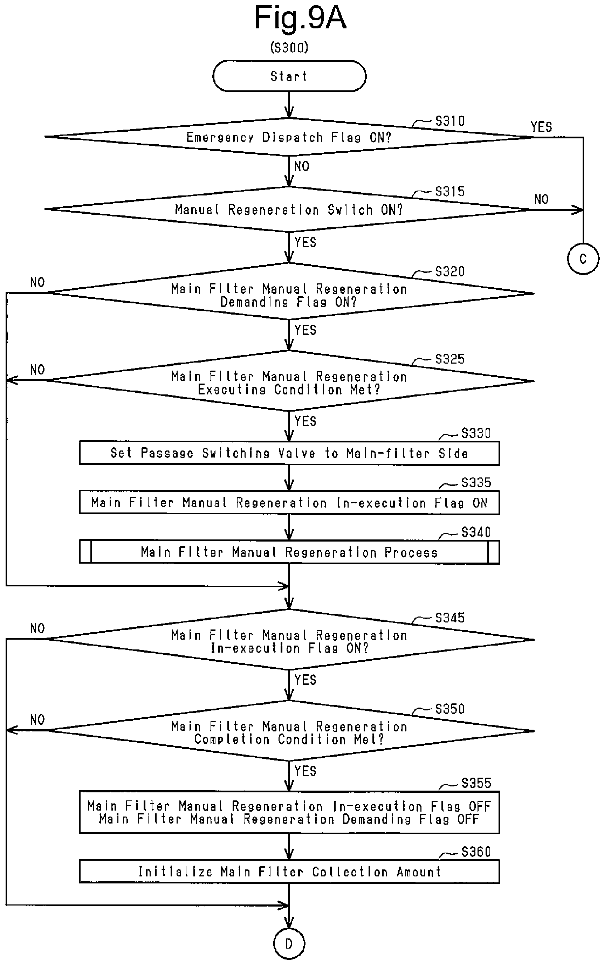

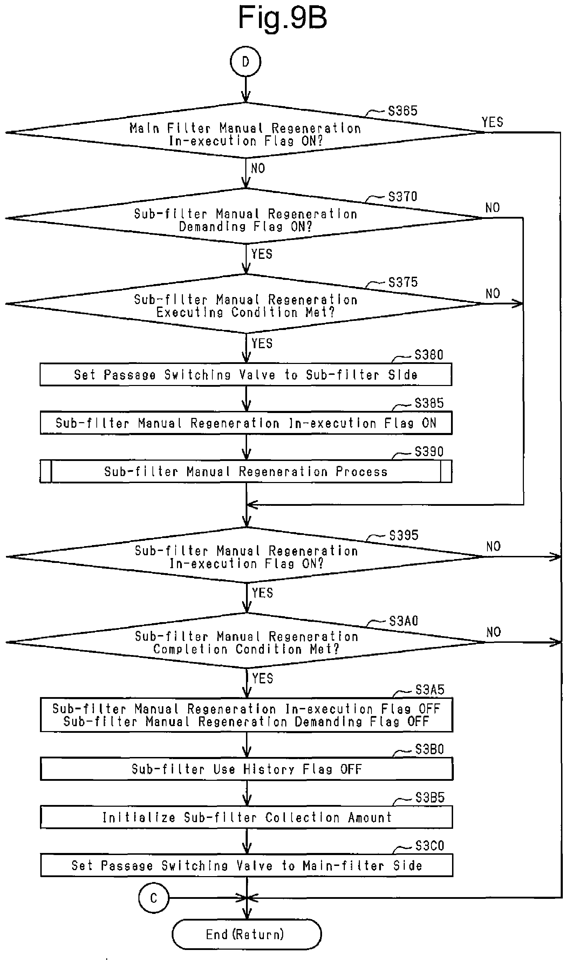

### • Description of the process S300 (FIGs. 9A and 9B) of the second embodiment

Next, the process S300 shown in FIGs. 9A and 9B will be described. The process of the flowchart shown in FIGs. 9A and 9B differs from that of the flowchart of the first embodiment shown in FIG. 4 in that the processes of step S330 and step S365 to step S3C0 indicated by the thick solid line are added and differs in the branch destinations of step S345 and step S350. The following description will be focused on these differences.

In the process S300 of the second embodiment, the manual regeneration process of the sub-filter and the control of the passage switching valve are added to the manual regeneration process of the main filter compared with the process S300 of the first embodiment shown in FIG. 4. When the manual regeneration process of the main filter is to be performed, the control device 25 sets the passage switching valve to the main filter side and performs the manual regeneration process of the main filter, and when the manual regeneration process of the sub-filter is to be performed, the control device 25 sets the passage switching valve to the sub-filter side and performs the manual regeneration process of the sub-filter.

If the control device 25 proceeds to step S325, the control device 25 determines whether or not the conditions for executing main filter manual regeneration are met. If the conditions are met (Yes), the control device 25 proceeds to step S330, and if the conditions are not met (No), the control device 25 proceeds to step S345. See the description of step S325 shown in FIG. 4.

If the control device 25 proceeds to step S330, the control device 25 sets the passage switching valve 42V to the main filter side and proceeds to step S335.

If the control device 25 proceeds to step S345, the control device 25 determines whether or not the main filter manual regeneration in-execution flag is on. If the flag is on (Yes), the control device 25 proceeds to step S350, and if the flag is not on (No), the control device 25 proceeds to step S365.

If the control device 25 proceeds to step S350, the control device 25 determines whether or not the conditions for completion of main filter manual regeneration are met. If the conditions are met (Yes), the control device 25 proceeds to step S355, and if the conditions are not met (No), the control device 25 proceeds to step S365.

In step S360, the control device 25 initializes (resets) the collection amount of the main filter (main filter collection amount) and proceeds to step S365.

If the control device 25 proceeds to step S365, the control device 25 determines whether or not the main filter manual regeneration in-execution flag is on. If the flag is on (Yes), the control device 25 ends the process S300, and if the flag is not on (No), the control device 25 proceeds to step S370.

If the control device 25 proceeds to step S370, the control device 25 determines whether or not the sub-filter manual regeneration demanding flag is on. If the flag is on (Yes), the control device 25 proceeds to step S375, and if the flag is not on (No), the control device 25 proceeds to step S395.

If the control device 25 proceeds to step S375, the control device 25 determines whether or not the conditions for executing sub-filter manual regeneration are met. If the conditions are met (Yes), the control device 25 proceeds to step S380, and if the conditions are not met (No), the control device 25 proceeds to step S395. The conditions for executing sub-filter manual regeneration are, for example, that the vehicle is standing still, the shift lever (gear) is in neutral or park, and the accelerator depression amount is zero.

If the control device 25 proceeds to step S380, the control device 25 sets the passage switching valve 42V to the sub-filter side and proceeds to step S385. If the control device 25 proceeds to step S385, the control device 25 sets the sub-filter manual regeneration in-execution flag to on and proceeds to step S390.

In step S390, the control device 25 executes the manual regeneration process of the sub-filter and proceeds to step S395. Details of the manual regeneration process of the sub-filter will not be described herein. In the manual regeneration process of the sub-filter, the temperature of the exhaust gas inside the sub-filter is forcibly increased to burn off the particulate matters collected, for example, by forcibly increasing the number of revolutions to a predetermined number of revolutions, delaying the injection timing so as to increase the exhaust gas temperature, reducing the injection pressure, or injecting fuel from the injection valve provided on the upstream side of the oxidation catalyst.

If the control device 25 proceeds to step S395, the control device 25 determines whether or not the sub-filter manual regeneration in-execution flag is on. If the flag is on (Yes), the control device 25 proceeds to step S3A0, and if the flag is not on (No), the control device 25 ends the process S300.

If the control device 25 proceeds to step S3A0, the control device 25 determines whether or not the conditions for completion of sub-filter manual regeneration are met. If the conditions are met (Yes), the control device 25 proceeds to step S3A5, and if the conditions are not met (No), the control device 25 ends the process S300. The conditions for completion of sub-filter manual regeneration are, for example, that the elapsed time since the sub-filter manual regeneration in-execution flag is turned on is equal to or more than predetermined time (e.g., about several tens of minutes).

If the control device 25 proceeds to step S3A5, the control device 25 sets the sub-filter manual regeneration in-execution flag to off and sets the sub-filter manual regeneration demanding flag to off before proceeding to step S3B0. In step S3B0, the control device 25 sets the sub-filter use history flag to off and proceeds to step S3B5.

In step S3B5, the control device 25 initializes (resets) the amount of particulate matters collected by the sub-filter and proceeds to step S3C0. In step S3C0, the control device 25 sets the passage switching valve 42V to the main filter side and ends the process S300.

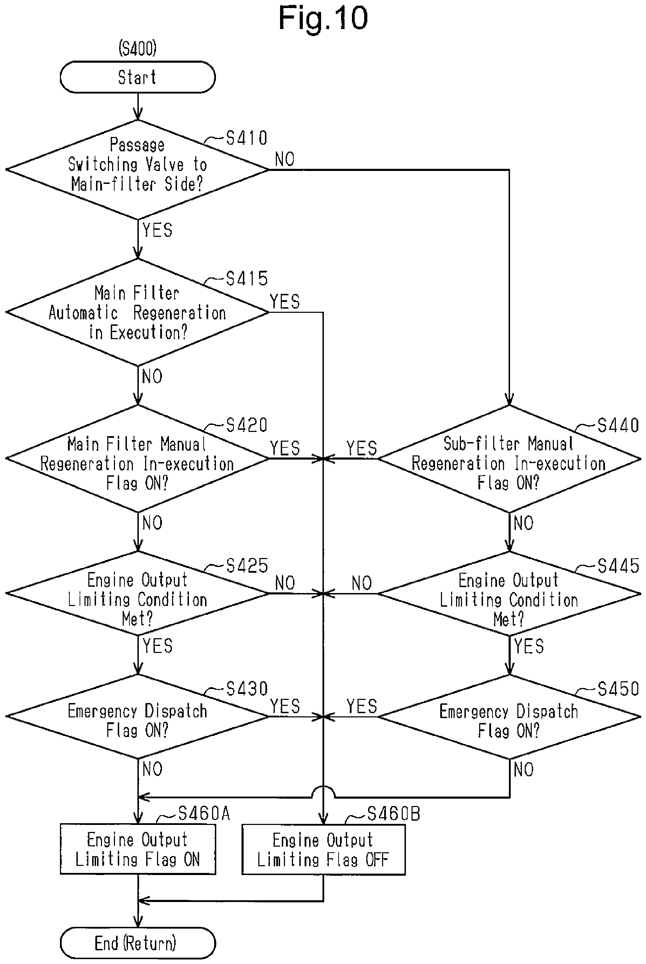

### • Description of the process S400 (FIG. 10) of the second embodiment

Next, the process S400 shown in FIG. 10 will be described. The process of the flowchart shown in FIG. 10 differs from that of the flowchart of the first embodiment shown in FIG. 5 in that the processes of step S410 and step S440 to step S450 indicated by the thick solid line are added. The following description will be focused on this difference.

The process S400 of the second embodiment includes the process S400 of the first embodiment (see FIG. 5) which forcibly cancels limitation of the engine output when the emergency vehicle is being dispatched to an emergency even if the state of the main filter while the main filter is used requires limitation of the engine output. In addition, the process S400 of the second embodiment includes a process which forcibly cancels limitation of the engine output when the emergency vehicle is being dispatched to an emergency even if the state of the sub-filter while the sub-filter is used requires limitation of the engine output.

In step S410, the control device 25 determines whether or not the passage switching valve is set to the main filter side. If the passage switching valve is set to the main filter side (Yes), the control device 25 proceeds to step S415, and if the passage switching valve is not set to the main filter side (No), the control device 25 proceeds to step S440.

If the control device 25 proceeds to step S440, the control device 25 determines whether or not the sub-filter manual regeneration in-execution flag is on. If the flag is on (Yes), the control device 25 proceeds to step S460B, and if the flag is not on (No), the control device 25 proceeds to step S445.

If the control device 25 proceeds to step S445, the control device 25 determines whether or not the conditions for limiting the output for the sub-filter are met. If the conditions are met (Yes), the control device 25 proceeds to step S450, and if the conditions are not met (No), the control device 25 proceeds to step S460B. The control device 25 determines that the conditions for limiting the engine output are met, for example, when the amount of particulate matters collected by the sub-filter exceeds the output limitation threshold of the sub-filter (corresponding to a third predetermined amount).

If the control device 25 proceeds to step S450, the control device 25 determines whether or not the emergency dispatch flag is on. If the flag is on (Yes), the control device 25 proceeds to step S460B, and if the flag is not on (No), the control device 25 proceeds to step S460A.

### • Description of the process S500 (FIG. 11) of the second embodiment

Next, the process S500 shown in FIG. 11 will be described. The process of the flowchart shown in FIG. 11 differs from that of the flowchart of the first embodiment shown in FIG. 6 only in that the "main" filter overheat history flag is changed to the "sub"-filter overheat history flag, that the "main" filter replacement demanding lamp is changed to the "sub"-filter replacement demanding lamp, and that the "main" filter replacement done flag is changed to the "sub"-filter replacement done flag. The flow of the steps of the process S500 shown in FIG. 11 are the same as those of the process S500 shown in FIG. 6, and will therefore not be described herein.

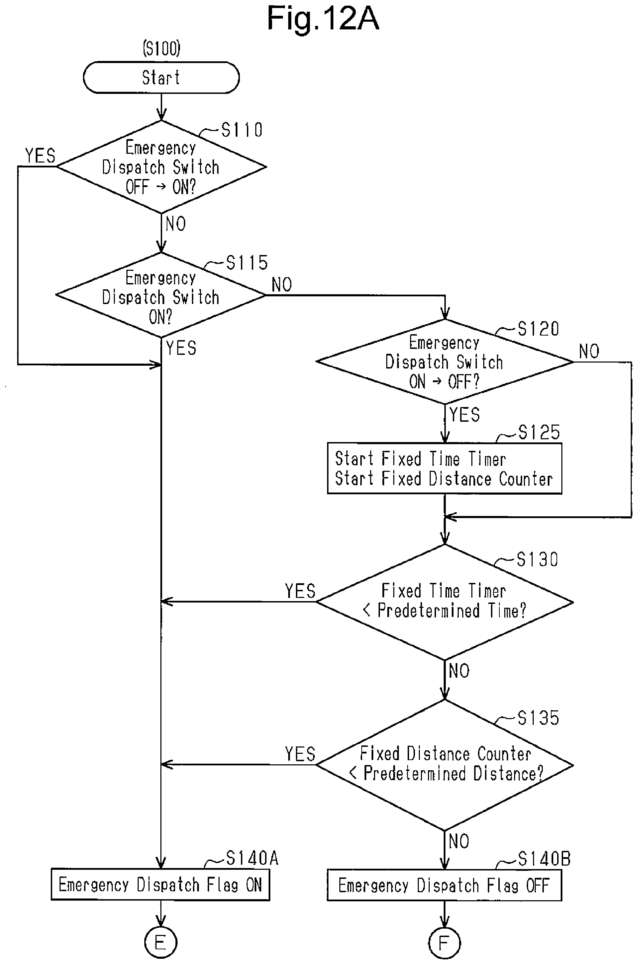

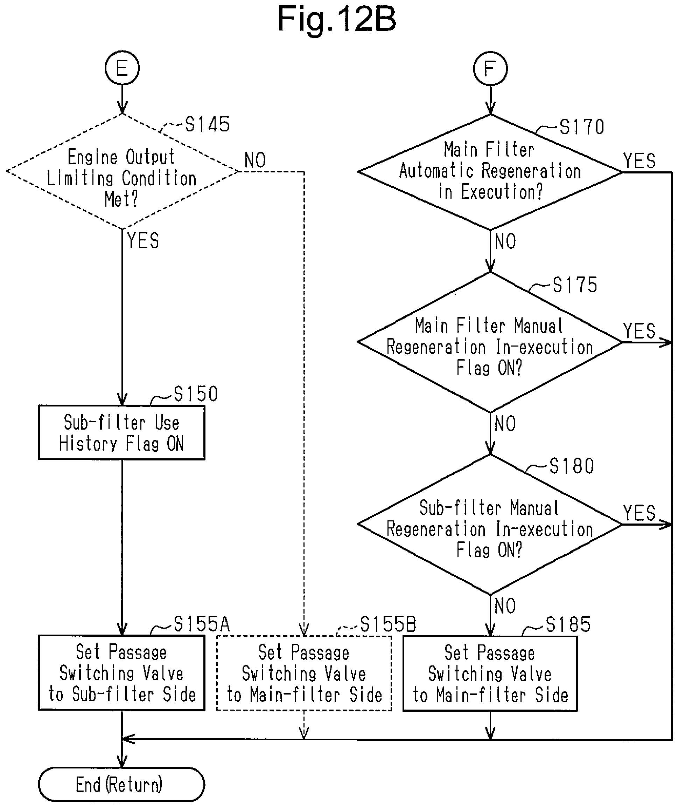

### • The procedure of a third embodiment (FIGs. 12A and 12B)

The third embodiment differs from the second embodiment in that, when the emergency vehicle is being dispatched to an emergency, the control device 25 forcibly sets the passage switching valve to the sub-filter side regardless of the amount of particulate matters collected by the main filter. Moreover, when the amount of particulate matters collected by the sub-filter 42S is a collection amount (corresponding to the second predetermined amount) which requires the state of the engine to be shifted to the engine output limitation state, the control device 25 forcibly cancels the engine output limitation state. When the sub-filter is used, the control device 25 sets the sub-filter use history flag to on in order to urge that the manual regeneration process of the sub-filter be performed after the emergency dispatch state is cancelled.

Although not shown, when the passage switching valve 42V is set to the main filter side, the control device 25 integrates the amount of particulate matters collected by the main filter 42M (main filter collection amount) on the basis of the operation state of the engine. When the passage switching valve 42V is set to the sub-filter side, the control device 25 integrates the amount of particulate matters collected by the sub-filter 42S (sub-filter collection amount) on the basis of the operation state of the engine.

The process S100 of the third embodiment shown in FIGs. 12A and 12B differs from the process S100 of the second embodiment shown in FIGs. 7A and 7B in that step S145 and step S155B are omitted. The following description will be focused on this difference. The process S200, process S300, process S400, and process S500 are the same as those of the second embodiment and will therefore not be described herein.

### • Description of the process S100 (FIGs. 12A and 12B) of the third embodiment

In step S140A, the control device 25 sets the emergency dispatch flag to on and proceeds to step S150. In step S150, the control device 25 sets the sub-filter use history flag to on and proceeds to step S155A.

In step S155A, the control device 25 sets the passage switching valve to the sub-filter side and ends the process S500.

The process of forcibly cancelling the engine output limitation state when the emergency vehicle is being dispatched to an emergency, even if the amount of particulate matters collected by the sub-filter 42S is a collection amount (corresponding to the second predetermined amount) which requires the state of the engine to be shifted to the engine output limitation state, is the same as the process S400 of the second embodiment (see FIG. 10) and will therefore not be described herein.

While the exhaust gas purification system of an emergency vehicle and the procedures of the control device of the exhaust gas purification system have been described above, the present invention can also be applied as an exhaust gas purification method for an emergency vehicle as described in (1) to (3) below.
(1) An exhaust gas purification method for an emergency vehicle, in which: an exhaust gas purification system which has a control unit and a main filter but does not have a sub-filter and a passage switching unit is used; and, when the emergency vehicle is being dispatched to an emergency, if the amount of particulate matters collected by the main filter is above a first predetermined amount which requires the state of the engine to be shifted to an engine output limitation state, the engine output limitation state is forcibly cancelled.
(2) An exhaust gas purification method for an emergency vehicle, in which an exhaust gas purification system which has a control unit, a main filter, a sub-filter, and a passage switching unit is used; when the emergency vehicle is being dispatched to an emergency, if the passage switching unit is set to the main filter side and at the same time the amount of particulate matters collected by the main filter is above a first predetermined amount which requires the state of the engine to be shifted to an engine output limitation state, the passage switching unit is set to the sub-filter side; and if the amount of particulate matters collected by the sub-filter is above a second predetermined amount which requires the state of the engine to be shifted to the engine output limitation state, the engine output limitation state is forcibly cancelled.
(3) An exhaust gas purification method for an emergency vehicle, in which: an exhaust gas purification system which has a control unit, a main filter, a sub-filter, and a passage switching unit is used; when the emergency vehicle is being dispatched to an emergency, the passage switching unit is forcibly set to the sub-filter side; and if the amount of particulate matters collected by the sub-filter is above a second predetermined amount which requires the state of the engine to be shifted to the engine output limitation state, the engine output limitation state is forcibly cancelled.

The exhaust gas purification system 20 of an emergency vehicle of the present invention is not limited to the configurations, structures, operations, procedures, etc. described in the embodiments.

In the embodiments, the suction air flow rate detection part, the accelerator opening degree detection part, the NOx detection part, and the rotation detection part have been described as examples of the detection parts that allow the control device to detect the operation state of the internal combustion engine. The control device can use not only the detection parts but also various means including a drive signal to the injector to detect the operation state of the internal combustion engine.

In the description of the embodiments, the control device determines that the emergency vehicle is being dispatched to an emergency as long as at least one of the conditions, that the elapsed time since the emergency dispatch switch is turned from on to off is within predetermined time and that the travel distance since then is within a predetermined distance, is satisfied. The present invention is not limited to this example, and the control device may determine that the emergency vehicle is being dispatched to an emergency until the emergency vehicle reaches a set scene of an emergency on the basis of navigation information. Alternatively, the control device may determine that the emergency vehicle is being dispatched to an emergency until the shift lever (gear) of the emergency vehicle (emergency vehicle having reached the scene of the emergency) is put into park. Thus, various conditions can be used to allow the control device to determine that the emergency vehicle is being dispatched to an emergency until a predetermined condition is satisfied after the emergency dispatch switch is turned from on to off.

In the exhaust gas purification system shown in FIG. 1, the example has been described where the main filter 42M and the SCR catalyst 43 are separate and the sub-filter 42S and the SCR catalyst 43 are separate. The present invention is not limited to this example, and the exhaust gas purification system shown in FIG. 1 may include a catalyst having an integrated function of the main filter 42M and the SCR catalyst 43 or a catalyst having an integrated function of the sub-filter 42S and the SCR catalyst 43.

In an exhaust gas purification system of an emergency vehicle, a control unit performs a regeneration process when a collection amount of particulate matters exceeds a predetermined amount and, at the same time, when conditions for regeneration are satisfied. The control unit shifts the state of the engine to an engine output limitation state in which an engine output is limited when the regeneration process is not performed for a continuous period and the amount of particulate matters collected by the main filter exceeds a first predetermined amount. The control unit forcibly cancels the engine output limitation state when the emergency vehicle is being dispatched to an emergency and when the state of the engine is the engine output limitation state.

## Claims

1. An exhaust gas purification system of an emergency vehicle, comprising:
a detection part (31, 32, 33, 34) which detects an operation state of an engine (10);
a control unit (25) which controls the engine (10) on the basis of the operation state of the engine (10); and
a main filter (42M) which collects particulate matters contained in exhaust gas from the engine (10); **characterized by**
a notification part (52, 52A, 53, 53A) which notifies that the emergency vehicle is being dispatched to an emergency;
a sub-filter (42S) arranged in parallel to the main filter (42M); and
a passage switching unit (42V) which can be switched between a main filter side for leading the exhaust gas from the engine (10) to the main filter (42M) and a sub-filter side for leading the exhaust gas from the engine (10) to the sub-filter (42S) on the basis of a control signal from the control unit (25), wherein
the control unit (25)
integrates an amount of particulate matters collected by the main filter (42M) on the basis of the operation state of the engine (10) when the passage switching unit (42V) is set to the main filter side,
performs a regeneration process (S340) of burning off the particulate matters collected by the main filter (42M) when the collection amount of particulate matters integrated exceeds a predetermined amount and, at the same time, when conditions for regeneration are satisfied,
shifts the state of the engine (10) to an engine output limitation state in which an engine output is limited when the regeneration process is not performed for a continuous period and the amount of particulate matters collected by the main filter (42M) exceeds a first predetermined amount which is larger than the predetermined amount,
integrates a collection amount of the sub-filter (42S) when the passage switching unit (42V) is set to the sub-filter side,
sets the passage switching unit (42V) to the sub-filter side when the following conditions are met:
the emergency vehicle is being dispatched to an emergency; and
the passage switching unit (42V) is set to the main filter side while the collection amount of the main filter (42V) is above the first predetermined amount which requires the state of the engine (10) to be shifted to the engine output limitation state, and
forcibly cancels the engine output limitation state when the collection amount of the sub-filter (42S) is above a second predetermined amount which requires the state of the engine (10) to be shifted to the engine output limitation state.

2. An exhaust gas purification system of an emergency vehicle, comprising:
a detection part (31, 32, 33, 34) which detects an operation state of an engine (10);
a control unit (25) which controls the engine (10) on the basis of the operation state of the engine (10);
a main filter (42M) which collects particulate matters contained in exhaust gas from the engine (10); **characterized by**
a notification part (52, 52A, 53, 53A) which notifies that the emergency vehicle is being dispatched to an emergency;
a sub-filter (42S) provided in parallel to the main filter (42M); and
a passage switching unit (42V) which can be switched between a main filter side for leading the exhaust gas from the engine (10) to the main filter (42M) and a sub-filter side for leading the exhaust gas from the engine (10) to the sub-filter (42S) on the basis of a control signal from the control unit (25), wherein
the control unit (25)
integrates an amount of particulate matters collected by the main filter (42M) on the basis of the operation state of the engine (10) when the passage switching unit (42V) is set to the main filter side,
performs a regeneration process (S340) of burning off the particulate matters collected by the main filter (42M) when the collection amount of particulate matters integrated exceeds a predetermined amount and, at the same time, when conditions for regeneration are satisfied,
shifts the state of the engine (10) to an engine output limitation state in which an engine output is limited when the regeneration process is not performed for a continuous period and the amount of particulate matters collected by the main filter (42M) exceeds a first predetermined amount which is larger than the predetermined amount,
integrates a collection amount of the sub-filter (42S) when the passage switching unit (42V) is set to the sub-filter side,
forcibly sets the passage switching unit (42V) to the sub-filter side when the emergency vehicle is being dispatched to an emergency, and
forcibly cancels the engine output limitation state when a collection amount of the sub-filter (42S) is above a second predetermined amount which requires the state of the engine (10) to be shifted to the engine output limitation state.

3. The exhaust gas purification system of an emergency vehicle according to claim 1 or 2, further comprising:
a manual regeneration command part (57) which is operated by an occupant of the emergency vehicle in order to perform a manual regeneration process of the sub-filter (42S); and
a manual regeneration urging part (55) which urges the occupant to operate the manual regeneration command part (57), wherein
the control unit (25) activates the manual regeneration urging part (55) after the emergency dispatch state is cancelled when the sub-filter (42S) is used during emergency dispatch of the emergency vehicle.

4. The exhaust gas purification system of an emergency vehicle according to any one of claims 1 to 3, further comprising an emergency dispatch operation part (51) which is turned on or off by an occupant of the emergency vehicle, wherein
the notification part (52, 52A, 53, 53A) is activated through the emergency dispatch operation part (51), and
the control unit (25)
determines that the emergency vehicle is being dispatched to an emergency when the emergency dispatch operation part (51) is turned on, and
determines that the emergency vehicle is being dispatched to an emergency as long as a predetermined condition is satisfied when the emergency dispatch operation part (51) is turned off for a continuous period after being turned from on to off, wherein
the predetermined condition is at least one of the following:
that elapsed time since the emergency dispatch operation part (51) is turned from on to off is less than predetermined time, and
that a travel distance since the emergency dispatch operation part (51) is turned from on to off is less than a predetermined distance.

## Patentansprüche

1. Abgasreinigungssystem eines Einsatzfahrzeugs, das Folgendes aufweist:
einen Erfassungsteil (31, 32, 33, 34), der einen Betriebszustand einer Kraftmaschine (10) erfasst;
eine Steuereinheit (25), die die Kraftmaschine (10) auf Basis des Betriebszustands der Kraftmaschine (10) steuert; und
einen Hauptfilter (42M), der Partikel aufnimmt, die in dem Abgas von der Kraftmaschine (10) enthalten sind; **gekennzeichnet durch**
einen Mitteilungsteil (52, 52A, 53, 53A), der mitteilt, dass das Einsatzfahrzeug zu einem Notfall entsandt wird;
einen Unterfilter (42S), der parallel zu dem Hauptfilter (42M) angeordnet ist; und
eine Durchlassschalteinheit (42V), die auf Basis eines Steuersignals von der Steuereinheit (25) zwischen einer Hauptfilterseite zum Leiten des Abgases von der Kraftmaschine (10) zu dem Hauptfilter (42M), und einer Unterfilterseite zum Leiten des Abgases von der Kraftmaschine (10) zu dem Unterfilter (42S) geschaltet werden kann, wobei
die Steuereinheit (25)
dann, wenn die Durchlassschalteinheit (42V) auf die Hauptfilterseite gesetzt ist, eine Partikelmenge, die durch den Hauptfilter (42M) aufgenommen wurde, auf Basis des Betriebszustands der Kraftmaschine (10) integriert,
dann, wenn die integrierte aufgenommene Partikelmenge eine vorbestimmte Menge überschreitet und gleichzeitig die Bedingungen zur Regeneration zutreffen, einen Regenerationsprozess (S340) durchführt, bei dem die durch den Hauptfilter (42M) aufgenommenen Partikel abgebrannt werden,
dann, wenn der Regenerationsprozess für eine andauernde Zeitspanne nicht durchgeführt wird und die durch den Hauptfilter (42M) aufgenommene Partikelmenge eine erste vorbestimmte Menge überschreitet, die größer ist als die vorbestimmte Menge, den Zustand der Kraftmaschine (10) in einen Kraftmaschinen-Ausgabe-Begrenzungszustand verstellt, in dem die Ausgabe der Kraftmaschine begrenzt wird,
dann, wenn die Durchlassschalteinheit (42V) auf die Unterfilterseite gesetzt ist, eine Aufnahmemenge des Unterfilters (42S) integriert,
dann die Durchlassschalteinheit (42V) auf die Unterfilterseite setzt, wenn die folgenden Bedingungen erfüllt sind:
das Einsatzfahrzeug wird zu einem Notfall entsandt; und
die Durchlassschalteinheit (42V) ist auf die Hauptfilterseite gesetzt, während die Partikelaufnahmemenge des Hauptfilters (42V) oberhalb der ersten vorbestimmten Menge ist, die ein Verstellen des Zustands der Kraftmaschine (10) in den Kraftmaschinen-Ausgabe-Begrenzungszustand erfordert, und
dann, wenn die Aufnahmemenge des Unterfilters (42S) oberhalb einer zweiten vorbestimmten Menge ist, die ein Verstellen des Zustands der Kraftmaschine (10) in den Kraftmaschinen-Ausgabe-Begrenzungszustand erfordert, zwangsweise den Kraftmaschinen-Ausgabe-Begrenzungszustand aufhebt.

2. Abgasreinigungssystem eines Einsatzfahrzeugs, das Folgendes aufweist:
einen Erfassungsteil (31, 32, 33, 34), der einen Betriebszustand einer Kraftmaschine (10) erfasst;
eine Steuereinheit (25), die die Kraftmaschine (10) auf Basis des Betriebszustands der Kraftmaschine (10) steuert;
einen Hauptfilter (42M), der Partikel aufnimmt, die in dem Abgas von der Kraftmaschine (10) enthalten sind; **gekennzeichnet durch**
einen Mitteilungsteil (52, 52A, 53, 53A), der mitteilt, dass das Einsatzfahrzeug zu einem Notfall entsandt wird;
einen Unterfilter (42S), der parallel zu dem Hauptfilter (42M) bereitgestellt ist; und
eine Durchlassschalteinheit (42V), die auf Basis eines Steuersignals von der Steuereinheit (25) zwischen einer Hauptfilterseite zum Leiten des Abgases von der Kraftmaschine (10) zu dem Hauptfilter (42M), und einer Unterfilterseite zum Leiten des Abgases von der Kraftmaschine (10) zu dem Unterfilter (42S) geschaltet werden kann, wobei
die Steuereinheit (25)
dann, wenn die Durchlassschalteinheit (42V) auf die Hauptfilterseite gesetzt ist, eine Partikelmenge, die durch den Hauptfilter (42M) aufgenommen wurde, auf Basis des Betriebszustands der Kraftmaschine (10) integriert,
dann, wenn die integrierte aufgenommene Partikelmenge eine vorbestimmte Menge überschreitet und gleichzeitig die Bedingungen zur Regeneration zutreffen, einen Regenerationsprozess (S340) durchführt, bei dem die durch den Hauptfilter (42M) aufgenommenen Partikel abgebrannt werden,
dann, wenn der Regenerationsprozess für eine andauernde Zeitspanne nicht durchgeführt wird und die durch den Hauptfilter (42M) aufgenommene Partikelmenge eine erste vorbestimmte Menge überschreitet, die größer ist als die vorbestimmte Menge, den Zustand der Kraftmaschine (10) in einen Kraftmaschinen-Ausgabe-Begrenzungszustand verstellt, in dem die Ausgabe der Kraftmaschine begrenzt wird,
dann, wenn die Durchlassschalteinheit (42V) auf die Unterfilterseite gesetzt ist, eine Partikelaufnahmemenge des Unterfilters (42S) integriert,
dann, wenn das Einsatzfahrzeug zu einem Notfall entsandt wird, zwangsweise die Durchlassschalteinheit (42V) auf die Unterfilterseite setzt, und
dann, wenn eine Partikelaufnahmemenge des Unterfilters (42S) oberhalb einer zweiten vorbestimmten Menge ist, die ein Verstellen des Zustands der Kraftmaschine (10) in den Kraftmaschinen-Ausgabe-Begrenzungszustand erfordert, zwangsweise den Kraftmaschinen-Ausgabe-Begrenzungszustand aufhebt.

3. Abgasreinigungssystem eines Einsatzfahrzeugs nach Anspruch 1 oder 2, das ferner Folgendes aufweist:
einen Manuelle-Regenerations-Anweisungsteil (57), der von einem Insassen des Einsatzfahrzeugs betätigt wird, um einen manuellen Regenerationsprozess des Unterfilters (42S) durchzuführen; und
einen Manuelle-Regenerations-Aufforderungsteil (55), der den Insassen dazu auffordert, den Manuelle-Regenerations-Anweisungsteil (57) zu betätigen, wobei
die Steuereinheit (25) dann, wenn der Unterfilter (42S) während einer Notfallentsendung des Einsatzfahrzeugs verwendet wird, den Manuelle-Regenerations-Aufforderungsteil (55) aktiviert, nachdem der Notfall-Entsendungs-Betrieb abgebrochen wurde.

4. Abgasreinigungssystem eines Einsatzfahrzeugs nach einem der Ansprüche 1 bis 3, das ferner einen Notfall-Entsendungs-Betriebs-Teil (51) aufweist, der von einem Insassen des Einsatzfahrzeugs ein- und ausgeschaltet wird, wobei
der Mitteilungsteil (52, 52A, 53, 53A) durch den Notfall-Entsendungs-Betriebs-Teil (51) aktiviert wird, und
die Steuereinheit (25)
dann, wenn der Notfall-Entsendungs-Betriebs-Teil (51) eingeschaltet ist, bestimmt, dass das Einsatzfahrzeug zu einem Notfall entsandt wird, und
dann, wenn der Notfall-Entsendungs-Betriebs-Teil (51) für eine andauernde Zeitspanne ausgeschaltet ist, nachdem er von Ein auf Aus geschaltet wurde, bestimmt, dass das Einsatzfahrzeug zu einem Notfall entsandt wird, solange eine vorbestimmte Bedingung zutrifft, wobei
die vorbestimmte Bedingung mindestens eine der Folgenden ist:
dass die abgelaufene Zeit, seit der Notfall-Entsendungs-Betriebs-Teil (51) von Ein auf Aus geschaltet wurde, geringer ist als eine vorbestimmte Zeit, und
dass eine Fahrstrecke, seit der Notfall-Entsendungs-Betriebs-Teil (51) von Ein auf Aus geschaltet wurde, geringer ist als eine vorbestimmte Strecke.

## Revendications

1. Système d'épuration de gaz d'échappement d'un véhicule d'urgence, qui comprend :
une partie de détection (31, 32, 33, 34) qui détecte un état de fonctionnement d'un moteur à combustion interne (10) ;
une unité de commande (25) qui commande le moteur à combustion interne (10) sur la base de l'état de fonctionnement du moteur à combustion interne (10) ; et
un filtre principal (42M) qui collecte les matières particulaires contenues dans le gaz d'échappement qui provient du moteur à combustion interne (10) ; **caractérisé par**
une partie de notification (52, 52A, 53, 53A) qui notifie que le véhicule d'urgence est envoyé vers une urgence ;
un filtre secondaire (42S) agencé en parallèle avec le filtre principal (42M) ; et
une unité de commutation de passage (42V) qui peut être commutée entre un côté de filtre principal pour amener le gaz d'échappement qui provient du moteur à combustion interne (10) jusqu'au filtre principal (42M) et un côté de filtre secondaire pour amener le gaz d'échappement qui provient du moteur à combustion interne (10) jusqu'au filtre secondaire (42S) sur la base d'un signal de commande qui provient de l'unité de commande (25), dans lequel
l'unité de commande (25)
intègre une quantité de matières particulaires collectées par le filtre principal (42M) sur la base de l'état de fonctionnement du moteur à combustion interne (10) lorsque l'unité de commutation de passage (42V) est établie du côté de filtre principal,
effectue un processus de régénération (S340) qui consiste à brûler les matières particulaires collectées par le filtre principal (42M) lorsque la quantité de collecte de matières particulaires intégrée dépasse une quantité prédéterminée et, simultanément, lorsque les conditions pour la régénération sont satisfaites,
change l'état du moteur à combustion interne (10) en un état de limitation de sortie de moteur à combustion interne dans lequel une sortie de moteur à combustion interne est limitée lorsque le processus de régénération n'est pas effectué pendant une période continue et que la quantité de matières particulaires collectées par le filtre principal (42M) dépasse une première quantité prédéterminée qui est supérieure à la quantité prédéterminée,
intègre une quantité de collecte du filtre secondaire (42S) lorsque l'unité de commutation de passage (42V) est établie du côté de filtre secondaire,
établit l'unité de commutation de passage (42V) du côté de filtre secondaire lorsque les conditions suivantes sont satisfaites :
le véhicule d'urgence est envoyé vers une urgence ; et
l'unité de commutation de passage (42V) est établie du côté de filtre principal alors que la quantité de collecte du filtre principal (42V) est au-dessus de la première quantité prédéterminée qui nécessite que l'état du moteur à combustion interne (10) soit changé en l'état de limitation de sortie de moteur à combustion interne, et
annule de force l'état de limitation de sortie de moteur à combustion interne lorsque la quantité de collecte du filtre secondaire (42S) est au-dessus d'une deuxième quantité prédéterminée qui nécessite que l'état du moteur à combustion interne (10) soit changé en l'état de limitation de sortie de moteur à combustion interne.

2. Système d'épuration de gaz d'échappement d'un véhicule d'urgence, qui comprend :
une partie de détection (31, 32, 33, 34) qui détecte un état de fonctionnement d'un moteur à combustion interne (10) ;
une unité de commande (25) qui commande le moteur à combustion interne (10) sur la base de l'état de fonctionnement du moteur à combustion interne (10) ;
un filtre principal (42M) qui collecte les matières particulaires contenues dans le gaz d'échappement qui provient du moteur à combustion interne (10) ; **caractérisé par**
une partie de notification (52, 52A, 53, 53A) qui notifie que le véhicule d'urgence est envoyé vers une urgence ;
un filtre secondaire (42S) prévu en parallèle avec le filtre principal (42M) ; et
une unité de commutation de passage (42V) qui peut être commutée entre un côté de filtre principal pour amener le gaz d'échappement qui provient du moteur à combustion interne (10) jusqu'au filtre principal (42M) et un côté de filtre secondaire pour amener le gaz d'échappement qui provient du moteur à combustion interne (10) jusqu'au filtre secondaire (42S) sur la base d'un signal de commande qui provient de l'unité de commande (25), dans lequel
l'unité de commande (25)
intègre une quantité de matières particulaires collectées par le filtre principal (42M) sur la base de l'état de fonctionnement du moteur à combustion interne (10) lorsque l'unité de commutation de passage (42V) est établie du côté de filtre principal,
effectue un processus de régénération (S340) qui consiste à brûler les matières particulaires collectées par le filtre principal (42M) lorsque la quantité de collecte de matières particulaires intégrée dépasse une quantité prédéterminée et, simultanément, lorsque les conditions pour la régénération sont satisfaites,
change l'état du moteur à combustion interne (10) en un état de limitation de sortie de moteur à combustion interne dans lequel une sortie de moteur à combustion interne est limitée lorsque le processus de régénération n'est pas effectué pendant une période continue et que la quantité de matières particulaires collectées par le filtre principal (42M) dépasse une première quantité prédéterminée qui est supérieure à la quantité prédéterminée,
intègre une quantité de collecte du filtre secondaire (42S) lorsque l'unité de commutation de passage (42V) est établie du côté de filtre secondaire,
établit de force l'unité de commutation de passage (42V) du côté de filtre secondaire lorsque le véhicule d'urgence est envoyé vers une urgence, et
annule de force l'état de limitation de sortie de moteur à combustion interne lorsqu'une quantité de collecte du filtre secondaire (42S) est au-dessus d'une deuxième quantité prédéterminée qui nécessite que l'état du moteur à combustion interne (10) soit changé en l'état de limitation de sortie de moteur à combustion interne.

3. Système d'épuration de gaz d'échappement d'un véhicule d'urgence selon la revendication 1 ou 2, qui comprend en outre :
une partie de commande de régénération manuelle (57) qui est mise en oeuvre par un occupant du véhicule d'urgence afin d'effectuer un processus de régénération manuelle du filtre secondaire (42S) ; et
une partie d'incitation à la régénération manuelle (55) qui incite l'occupant à mettre en oeuvre la partie de commande de régénération manuelle (57), dans lequel
l'unité de commande (25) active la partie d'incitation à la régénération manuelle (55) après que l'état d'envoi vers une urgence a été annulé lorsque le filtre secondaire (42S) est utilisé pendant l'envoi vers une urgence du véhicule d'urgence.

4. Système d'épuration de gaz d'échappement d'un véhicule d'urgence selon l'une quelconque des revendications 1 à 3, qui comprend en outre une partie d'opération d'envoi vers une urgence (51) qui est activée ou désactivée par un occupant du véhicule d'urgence, dans lequel
la partie de notification (52, 52A, 53, 53A) est activée par la partie d'opération d'envoi vers une urgence (51), et
l'unité de commande (25)
détermine que le véhicule d'urgence est envoyé vers une urgence lorsque la partie d'opération d'envoi vers une urgence (51) est activée, et
détermine que le véhicule d'urgence est envoyé vers une urgence tant qu'une condition prédéterminée est satisfaite lorsque la partie d'opération d'envoi vers une urgence (51) est désactivée pendant une période continue après avoir été passée d'activée à désactivée, dans lequel
la condition prédéterminée est au moins l'une des conditions suivantes :
qu'un temps écoulé depuis que la partie d'opération d'envoi vers une urgence (51) a été passée d'activée à désactivée est inférieur à un temps prédéterminé, et
qu'une distance de déplacement depuis que la partie d'opération d'envoi vers une urgence (51) a été passée d'activée à désactivée est inférieure à une distance prédéterminée.
